# EUROPEAN PATENT APPLICATION

(11) **EP 4 693 465 A1**
(43) Date of publication of application: **11.02.2026**
(21) Application number: 24781164.9
(22) Date of filing: 25.03.2024
(51) Int. Cl.: H01M 4/36, H01M 4/525, H01M 4/505, H01M 4/58, H01M 4/62, H01M 4/131, H01M 4/136, H01M 10/052, H01M 4/02

(54) **COMPOSITE POSITIVE ELECTRODE ACTIVE MATERIAL, POSITIVE ELECTRODE COMPRISING SAME, AND LITHIUM BATTERY**

(30) Priority: 26.03.2023 KR 20230039408; 18.04.2023 KR 20230050727
(71) Applicant: SAMSUNG SDI CO., LTD., Yongin-si, Gyeonggi-do 17084 (KR)
(72) Inventor: JO, Sung Nim, Yongin-Si Gyeonggi-do 17084 (KR); SON, In Hyuk, Yongin-Si Gyeonggi-do 17084 (KR); MAH, Sang Kook, Yongin-Si Gyeonggi-do 17084 (KR); KAPYLOU, Andrei, Yongin-Si Gyeonggi-do 17084 (KR); SHIM, Kyu Eun, Yongin-Si Gyeonggi-do 17084 (KR)
(74) Representative: Michalski Hüttermann & Partner Patentanwälte mbB
(86) International application number: PCT/KR2024/003730
(87) International publication number: WO 2024/205173

(57) **Abstract**

Provided are a composite positive electrode active material, a positive electrode including the same, and a lithium battery, the composite positive electrode active material including: a first core (1^{st} core) including a first lithium transition metal oxide; a second core (2^{nd} core) including a second lithium transition metal oxide; and a shell arranged over a surface of at least one of the first core and the second core, the shell including: at least one type of first metal oxide; and a first carbon-based material, wherein the at least one type of first metal oxide is arranged in a matrix of the first carbon-based material, the at least one type of first metal oxide is represented by a formula of MₐO_{b} (0<a≤3, 0<b<4, and b is not an integer when a is 1, 2, or 3), wherein M is at least one metal selected from Groups 2 to 13, 15, and 16 of the periodic table of the elements, the first lithium transition metal oxide and the second lithium transition metal oxide have different particle diameters, the first lithium transition metal oxide has a layered crystal structure and a nickel (Ni) content of 60 mol% or more, and the second lithium transition metal oxide has an olivine-based crystal structure.

## Description

### Technical Field

Disclosed are a composite positive electrode active material, a positive electrode including the same, and a lithium battery.

### Background Art

For miniaturization and high performance of various devices, high energy density of lithium batteries is becoming more important in addition to making lithium batteries smaller and lighter. In other words, high-capacity lithium batteries are becoming important.

Existing high-capacity composite positive active materials have problems with side reactions with an electrolyte solution and thermal stability. In this regard, a composite positive electrode active material having high capacity, suppressed side reactions with an electrolyte solution, and excellent thermal stability is being investigated.

### Disclosure of Invention

### Technical Problem

One aspect is to provide a new composite positive electrode active material that reduces a surface side reaction with an electrolyte solution and has excellent thermal stability.

Another aspect is to provide a positive electrode including the composite positive electrode active material.

Another aspect is to provide a lithium battery including the positive electrode.

### Solution to Problem

According to one aspect, a composite positive electrode active material includes:
a first core (1^{st} core) including a lithium transition metal oxide;
a second core (2^{nd} core) including a second lithium transition metal oxide; and
a shell arranged over a surface of at least one of the first core and the second core,
the shell including: at least one type of first metal oxide; and a first carbon-based material,
wherein the at least one type of first metal oxide is arranged in a matrix of the first carbon-based material,
the at least one type of first metal oxide is represented by a formula of MₐO_{b} (0<a≤3, 0<b<4, and b is not an integer when a is 1, 2, or 3), M is at least one metal selected from Groups 2 to 13, 15, and 16 of the periodic table of the elements,
the first lithium transition metal oxide and the second lithium transition metal oxide have different particle diameters,
the first lithium transition metal oxide has a layered crystal structure and a nitrogen (Ni) content of 60 mol% or more, and
the second lithium transition metal oxide has an olivine-based crystal structure.

According to another aspect, a positive electrode includes:
a positive electrode current collector; and
a positive electrode active material layer arranged on one side or both sides of the positive electrode current collector and including the composite positive electrode active material and a binder.

According to another aspect, a lithium battery includes:
the positive electrode; a negative electrode; and an electrolyte arranged between the positive electrode and the negative electrode.

### Advantageous Effects of Invention

A composite positive electrode active material according to one aspect reduces a side reaction with an electrolyte and improves conductivity and thermal stability, and thus a lithium battery using the composite positive electrode active material may have improved cycle characteristics at high temperatures and improved thermal stability.

### Brief Description of the Drawings

FIG. 1 is a schematic cross-sectional view of a dry positive electrode active material according to an embodiment.
FIG. 2 is a schematic cross-sectional view of a dry positive electrode active material according to an embodiment.
FIG. 3 is a scanning electron microscope image showing the surface of a composite positive electrode active material prepared in Example 1.
FIG. 4 is a graph showing specific capacities of positive electrode active materials of Examples 1 to 4.

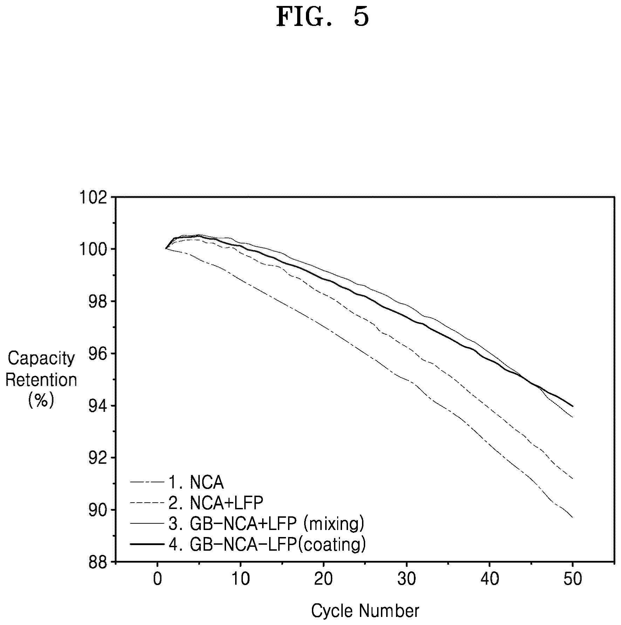

FIG. 5 is a graph showing cycle characteristics of lithium batteries including positive electrode active materials prepared in Example 1 and Comparative Examples 1 to 3, respectively.
FIG. 6 is a schematic view of a lithium battery according to an embodiment.
FIG. 7 is a schematic view of a lithium battery according to an embodiment.
FIG. 8 is a schematic view of a lithium battery according to an embodiment.

### Best Mode for Carrying out the Invention

### Mode for the Invention

Various embodiments are shown in the accompanying drawings. However, the present inventive idea may be embodied in many different forms and should not be construed as being limited to the implementations described herein. Rather, these embodiments are provided so that the present disclosure will be thorough and complete, and will fully convey the scope of the inventive idea to those skilled in the art. Like reference numerals designate like components.

It will be understood that when an element is referred to as being "on" another element, it may be directly on top of the other element, or another element may be interposed therebetween. In contrast, when an element is referred to as being "directly on" another element, there is no intervening element between them.

Although the terms "first," "second," "third," and the like may be used herein to describe various components, components, regions, layers, and/or regions, these components, components, regions, A layer and/or region should not be limited by these terms. These terms are only used to distinguish one element, component, region, layer or region from another element, component, region, layer or region. Thus, a first component, ingredient, region, layer, or area described below could be termed a second component, ingredient, region, layer, or area without departing from the teachings herein.

Terms used herein are for the purpose of describing specific embodiments, and are not intended to limit the present inventive idea. As used herein, the singular form is intended to include the plural form including "at least one" unless the context clearly dictates otherwise. "At least one" should not be construed as limiting to the singular. As used herein, the term "and/or" includes any and all combinations of one or more of the listed items. The terms "comprises" and/or "comprising" as used in the detailed description specify the presence of specified features, regions, integers, steps, operations, components, and/or ingredients, and one or more other features, regions, integers, steps, operations, components, and/or ingredients. However, it does not exclude the presence or addition thereof.

Spatially relative terms, such as "beneath," "below," "lower," "top," "above;" "upper," etc., can be used to facilitate describing the relationship of one component or feature to another component or feature. It will be understood that spatially relative terms are intended to include different orientations of a device in use or operation in addition to the orientations shown in drawings. For example, when a device in drawings is turned over, elements described as "beneath" or "bottom" other elements or features will be oriented "above" the other elements or features. Thus, the exemplary term "below" can encompass both directions of up and down. A device may be positioned in other orientations (rotated 90 degrees or rotated in other directions), and the spatially relative terms used herein interpreted accordingly.

Unless otherwise defined, all terms (including technical and scientific terms) used in the present specification have the same meaning as commonly understood by those skilled in the art to which the disclosure belongs to. In addition, terms such as terms defined in commonly used dictionaries should be interpreted to have meanings consistent with the meaning in the related art and the disclosure, and should not be construed as being idealized.

Exemplary embodiments are described with reference to cross-sectional views that are schematic diagrams of idealized embodiments. As such, variations from the illustrated shape should be expected as a result of, for example, manufacturing techniques and/or tolerances. Thus, the embodiments described herein should not be construed as being limited to the specific shapes of regions as shown herein, but should include deviations in shapes resulting, for example, from manufacturing. For example, regions illustrated or described as flat regions may generally have rough and/or non-linear characteristics. Moreover, the angles shown as sharp may be round. Therefore, regions illustrated in drawings are schematic in nature, and shapes thereof are not intended to illustrate the precise shape of the regions and are not intended to limit the scope of the claims.

The "Group" means a group of the Periodic Table of Elements according to the 1 to 18 grouping system of the International Union of Pure and Applied Chemistry ("IUPAC").

In the present specification, the term "particle diameter" refers to an average diameter of particles if the particles are spherical, and refers to an average major axis length of particles if the particles are non-spherical. The particle diameter may be measured by using a particle size analyzer (PSA). The "particle diameter" refers to, for example, an average particle diameter. The "average particle diameter" may be, for example, a median particle diameter D50.

For example, a median particle diameter D50 refers to a particle size corresponding to a 50 % cumulative volume calculated from particles having a small particle size in a particle size distribution measured by, for example, a laser diffraction method.

For example, a median particle diameter D90 refers to a particle size corresponding to a 90 % cumulative volume calculated from particles having a small particle size in a particle size distribution measured by, for example, a laser diffraction method.

For example, a median particle diameter D10 refers to a particle size corresponding to a 10 % cumulative volume calculated from particles having a small particle size in a particle size distribution measured by, for example, a laser diffraction method.

The term "metal" as used herein may include both a metal and a metalloid, such as silicon and germanium, in an elemental state or an ionic state.

The term "alloy" as used herein may refer to a mixture of two or more metals.

The term "electrode active material" as used herein refers to an electrode material capable of undergoing lithiation and delithiation.

The term "positive electrode active material" as used herein may refer to a positive electrode material capable of undergoing lithiation and delithiation.

The term "negative electrode active material" as used herein may refer to a negative electrode material capable of undergoing lithiation and delithiation.

The terms "lithiation" and "lithiate" as used herein refer to a process of adding lithium to an electrode active material.

The terms "delithiation" and "delithiate" as used herein refer to a process of removing lithium from an electrode active material.

The terms "charging" and "charge" as used herein may refer to a process of providing electrochemical energy to a battery.

The terms "discharging" and "discharge" as used herein may refer to a process of eliminating electrochemical energy from a battery.

The terms "positive electrode" and "cathode" as used herein may refer to an electrode in which electrochemical reduction and lithiation occur during a discharge process.

The terms "negative electrode" and "anode" as used herein may refer to an electrode in which electrochemical oxidation and delithiation occur during a charge process.

While particular embodiments have been described, currently unforeseen or unforeseeable alternatives, modifications, variations, improvements, and substantial equivalents may occur to applicants or those skilled in the art. Accordingly, the appended claims as filed and as may be amended are intended to embrace all such alternatives, modifications, variations, improvements and substantial equivalents.

Hereinafter, according to example embodiments, a composite positive electrode active material, a positive electrode including the same, and a lithium battery will be further described in detail.

### [Composite positive electrode active material]

A composite positive electrode active material according to an embodiment includes: a first core (1^{st} core) including a first lithium transition metal oxide; a second core (2^{nd} core) including a second lithium transition metal oxide; and a shell arranged over a surface of at least one of the first core and the second core, the shell including: at least one type of first metal oxide; and a first carbon-based material, wherein the first metal oxide is arranged in a first carbon-based material matrix, the first metal oxide is represented by a formula of MₐO_{b} (wherein 0<a≤3, 0<b<4, and b is not an integer when a is 1, 2, or 3), M is at least one metal selected from Groups 2 to 13, 15, and 16 of the periodic table of the elements, the first lithium transition metal oxide and the second lithium transition metal oxide have different particle diameters, the first lithium transition metal oxide has a layered crystal structure and a Ni content of 60 mol% or more, and the second lithium transition metal oxide has an olivine-based crystal structure.

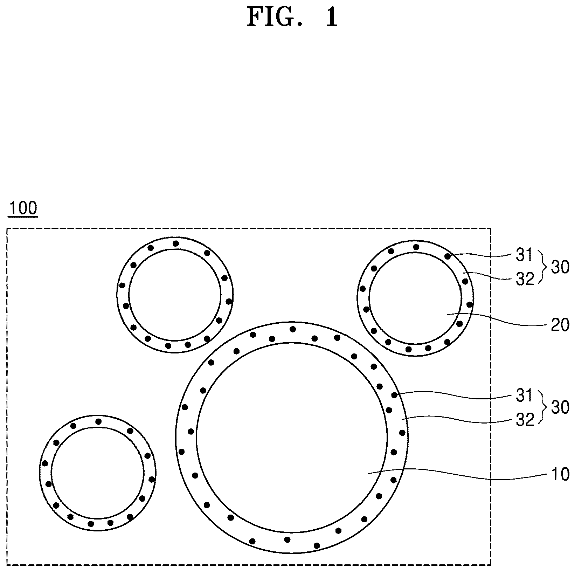

Referring to FIG. 1, a composite positive electrode active material 100 includes a first core 10, a second core 20, and a shell 30 arranged continuously or discontinuously along a surface of at least one of the first core 10 and the second core 20. The shell 30 may cover all or part of the first core 10 and the second core 20. The shell 30 may include a first metal oxide 31 and a first carbon-based material 32. The composite positive electrode active material 100 may be, for example, a dry composite positive electrode active material that is not impregnated, dissolved, or dispersed in a processing solvent during the manufacture of a positive electrode, or a wet composite positive electrode active material that is impregnated, dissolved, or dispersed in a processing solvent during the manufacture of a positive electrode. The composite positive electrode active material 100 may be, for example, a dry composite positive electrode active material that does not include or contact with a processing solvent in the process of manufacturing a positive electrode, or a wet composite positive electrode active material that includes or contacts with a processing solvent in the process of manufacturing a positive electrode.

The composite positive electrode active material 100 may have, for example, a first core 10/shell 30 structure and/or a second core 20/shell 30 structure. The first core 10 and the second core 20 may have, for example, different particle diameters. The structure of the first core 10/shell 30 structure and the second core 20/shell 30 structure may have different particle diameters.

The composite positive electrode active material 100 may have a mixed structure of first core 10/shell 30 and second core 10/shell 30, and thus may have improved mixture density and improved specific capacity. For example, regarding the mixed structure of the first core 10/shell 30 and the second core 10/shell 30 in the composite positive electrode active material 100, the first core 10 and the second core 20 have different particle diameters, such that the second core 10/shell 30 structure may be arranged in voids between a plurality of the first core 10/shell 30 structures, thereby improving the mixture density and specific capacity of the overall composite positive electrode active material 100. As the mixture density and specific capacity of the composite positive electrode active material 100 are improved, the capacity characteristics of a lithium battery including the composite positive electrode active material 100 may be improved accordingly. In addition, when the shell 30 of the composite positive electrode active material 100 includes the first carbon-based material 32, the conductivity and thermal stability of the composite positive electrode active material 100 may be improved. As the conductivity and thermal stability of the composite positive electrode active material 100 are improved, the capacity characteristics and cycle characteristics at high temperatures of a lithium battery including the composite positive electrode active material 100 may be improved accordingly.

For example, the first core 10 may be a large-diameter positive electrode active material, and a particle diameter of the first core 10 is greater than a particle diameter of the second core 20. For example, the first core 10 may be a large-diameter lithium transition metal oxide, and a particle diameter of the first core 10 is greater than a particle diameter of the second core 20. For example, the second core 20 may be a small-diameter positive electrode active material, and a particle diameter of the second core 20 is smaller than a particle diameter of the first core 10. For example, the second core 20 may be a small-diameter lithium transition metal oxide, and a particle diameter of the second core 20 is smaller than a particle diameter of the first core 10. For example, the first lithium transition metal oxide included in the first core 10 may be a large-diameter positive electrode active material, and the second lithium transition metal oxide included in the second core 20 may be a small-diameter positive electrode active material. For example, the second lithium transition metal oxide with an average particle diameter smaller than that of the first lithium transition metal oxide may be arranged in the void between the first lithium transition metal oxides. When the second lithium transition metal oxide, which are small-diameter particles, is arranged in the void between the first lithium transition metal oxides, which are large-diameter particles, the ion conductivity and electronic conductivity of a positive electrode including the composite positive electrode active material 100 may be simultaneously improved. In addition, the energy density of a positive electrode including the composite positive electrode active material '00 may be further improved. Consequently, the energy density of a lithium battery including the composite positive electrode active material 100 may be improved, and the cycle characteristics of the same lithium battery may be then improved.

The first lithium transition metal oxide and the second lithium transition metal oxide may have, for example, a bimodal particle size distribution in a particle size distribution chart. For example, the composite positive electrode active material 100 may have a bimodal particle size distribution having two peaks in a particle size distribution chart obtained by using a particle size analyzer (PSA) or the like. The bimodal particle size distribution may have a first peak corresponding to the first lithium transition metal oxide and a second peak corresponding to the second lithium transition metal oxide.

A ratio of the particle diameter of the first lithium transition metal oxide to the particle diameter of the second lithium transition metal oxide may be, for example, 3:1 to 40:1, 3:1 to 30:1, 3:1 to 20:1, 3:1 to 10:1, or 3:1 to 5:1. When the ratio of the particle diameter of the first lithium transition metal oxide to the particle diameter of the second lithium transition metal oxide is within the ranges above, the energy density and cycle characteristics of a lithium battery including the composite positive electrode active material may be further improved.

The particle diameter of the first lithium transition metal oxide may be, for example, greater than 10 µm to up to 30 µm, 11 µm to 25 µm, 11 µm to 20 µm, or 11 µm to 15 µm. The particle diameter of the first lithium transition metal oxide may be, for example, a median particle diameter D50.

The particle diameter of the second lithium transition metal oxide may be, for example, 1 µm to 10 µm, 1 µm to 9 µm, 1 µm to 8 µm, 1 µm to 5 µm, or 1 µm to 4 µm.

The particle diameter of the second lithium transition metal oxide may be, for example, a median particle diameter D50. When the average particle diameters of the first lithium transition metal oxide and the second lithium transition metal oxide are within the ranges above, the energy density and cycle characteristics of a lithium battery including the composite positive electrode active material 100 may be further improved. The particle diameters of the first lithium transition metal oxide and the second lithium transition metal oxide may be, for example, measured with a measurement device using a laser diffraction method or a dynamic light scattering method. The particle diameter may be, for example, measured with a laser scattering particle size distribution meter (e.g., LA-920 of Horiba Ltd.), and is a median particle diameter D50 value when 50 % of the particles have been accumulated in volume conversion from the smallest particles. Alternatively, the particle diameters of the first lithium transition metal oxide and the second lithium transition metal oxide may be measured from a scanning electron microscope (SEM) image or using an optical microscope.

A weight ratio of the first lithium transition metal oxide to the second lithium transition metal oxide may be, for example, 90:10 to 60:40, 85:15 to 65:35, 80:20 to 65:35, or 75:25 to 65:35. When the weight ratio of the first lithium transition metal oxide to the second lithium transition metal oxide is within the ranges above, the energy density and/or cycle characteristics of a lithium battery including the composite positive electrode active material 100 may be further improved.

The first core 10 may include the first lithium transition metal oxide, and the second core 20 may include the second lithium transition metal oxide.

The first lithium transition metal oxide may have, for example, a layered crystal structure and have a Ni content of 60 mol% or more, and the second lithium transition metal oxide may have, for example, an olivine-based crystal structure. The first lithium transition metal oxide may be, for example, the one having a layered crystal structure and a Ni content of 60 mol% or more, and may easily implement high capacity characteristics of the composite positive electrode active material including the first lithium transition metal oxide. The second lithium transition metal oxide may have, for example, an olivine-based crystal structure, and thus may easily implement thermal stability characteristics of the composite positive electrode active material including the second lithium transition metal oxide. In this regard, the composite positive electrode active material including the first lithium transition metal oxide and the second lithium transition metal oxide at the same time may have high capacity characteristics and thermal stability characteristics at the same time.

The first core 10 may include, for example, compounds selected from lithium transition metal oxides represented by Formulae 1 to 6. The first lithium transition metal oxide may be represented by a formula selected from Formulae 1 to 6:

Formula 1 LiₐNiₓCo_{y}M_{z}O_{2-b}A_{b}

wherein, in Formula 1,
1.0≤a≤1.2, 0≤b≤0.2, 0.8≤x<1, 0≤y≤0.3, 0<z≤0.3, and x+y+z=1,
M is manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

   Formula 2 LiNiₓCo_{y}Mn_{z}O₂

   Formula 3 LiNiₓCo_{y}Al_{z}O₂
wherein, in Formulae 2 and 3, 0.8≤x≤0.95, 0≤y≤0.2, 0<z≤0.2, and x+y+z=1,

   <Formula 4> LiNiₓCo_{y}Mn_{z}Al_{w}O₂
wherein, in Formula, 0.8≤x≤0.95, 0≤y≤0.2, 0<z≤0.2, 0<w≤0.2, and x+y+z+w=1,

   <Formula 5> LiₐCoₓM_{y}O_{2-b}A_{b}
wherein, in Formula 5,
1.0:5a:51.2, 0≤b≤0.2, 0.9≤x≤1, 0≤y≤0.1, and x+y=1,
M is manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

   Formula 6 LiₐNiₓMn_{y}M'_{z}O_{2-b}A_{b}
wherein, in Formula 6,
1.0≤a≤1.2, 0≤b≤0.2, 0 <x≤0.3, 0.5≤y<1, 0<z≤0.3, and x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

The second core 20 may include, for example, compounds selected from lithium transition metal oxides represented by Formulae 7 and 8. The second lithium transition metal oxide may be represented by a formula selected from Formulae 7 and 8:

Formula 7 LiₐM1ₓM2_{y}PO_{4-b}X_{b}

wherein, in Formula 7, 0.90≤a≤1.1, 0≤x≤0.9, 0≤y≤0.5, 0.9 <x+y<1.1, and 0≤b≤2 ,
M1 may be chromium (Cr), manganese (Mn), iron (Fe), cobalt (Co), nickel (Ni), copper (Cu), zirconium (Zr), or a combination thereof,
M2 may be Mg, Ca, Sr, Ba, Ti, Zn, B, Nb, Ga, In, Mo, W, Al, Si, Cr, V, Sc, Y, or a combination thereof, and X may be O, F, S, P, or a combination thereof.

   Formula 8 LiₐM3_{z}PO₄
wherein, in Formula 8, 0.90≤a≤1.1, 0.9≤z≤1.1, and
M3 may be Cr, Mn, Fe, Co, Ni, Cu, Zr, or a combination thereof.

The composite positive electrode active material 100 may have a first core 10/shell 30 structure and/or a second core 20/shell 30 structure, wherein the shell 30 may be arranged continuously or discontinuously along a surface of the first core 10 or a surface of the second core 20. The composite positive electrode active material 100 may have a mixed structure of first core 10/shell 30 and second core 20/shell 30, wherein the shell 30 may be arranged continuously or discontinuously along a surface of the first core 10 and a surface of the second core 20.

The shell 30 includes the first metal oxide arranged in a matrix of the first carbon-based material 32, and thus the shell 30 may be arranged more uniformly on the first core 10 or the second core 20. For example, the shell 30 may be derived from the composite including the first metal oxide 31 arranged in the matrix of the first carbon-based material 32, and then introduced onto the first core 10 or the second core 20, and thus may be arranged on the first core 10 or the second core 20 more uniformly without aggregation. The shell 30 arranged uniformly on the first core 10 or the second core 20 may effectively block the contact between the core and the electrolyte solution, thereby preventing a side reaction caused by the contact between the electrolyte solution and either the first core 10 or the second core 20. In addition, ion mixing (e.g., cation mixing) may be suppressed by the contact between the electrolyte and either the first core 10 or the second core 20, thereby suppressing the formation of a resistance layer on the surface of either the first core 10 or the second core 20. In addition, by introducing the shell 30 on the first core 10 or the second core, the leaching of transition metal ions from the first core 10 or the second core 20, each including transition metals, may be suppressed. The first carbon-based material 32 may be, for example, a crystalline carbon-based material. The first carbon-based material 32 may be, for example, a carbon-based nanostructure. The first carbon-based material 32 may be, for example, a two-dimensional carbon-based nanostructure. The first carbon-based material 32 may be, for example, graphene. For example, the shell including graphene and/or a matrix thereof may be flexible, and thus a change in the volume of the composite positive electrode active material 100 during charging and discharging of a battery may be easily accepted, and occurrence of cracks in the composite positive electrode active material 100 may be then suppressed. Graphene has high electronic conductivity, and thus interfacial resistance between the composite positive electrode active material 100 and the electrolyte solution may be reduced. Despite the introduction of a graphene-containing shell, the increase in the internal resistance of a lithium battery may be suppressed. In contrast, carbon-based materials of the art that do not include the first metal oxide 31 are easily aggregated, making it difficult to uniformly distribute the same on the core of the dry negative electrode active material. In addition, the matrix of the first carbon-based material 32 may be, for example, derived from a graphene matrix, and thus may have relatively low density and high porosity compared to carbon-based materials of the derived from graphite-based materials.

The composite positive electrode active material 100 may have a mixed structure of first core 10/shell 30 and second core 10/shell 30. The shell 30 may include the first metal oxide 31, and metal included in the first metal oxide 31 may be, for example, at least one selected from Al, Nb, Mg, Sc, Ti, Zr, V, W, Mn, Fe, Co, Pd, Cu, Ag, Zn, Sb, and Se. The first metal oxide 31 may be, for example, at least one selected from Al₂O_{z}(0<z<3), NbOₓ(0<x<2.5), MgOₓ(0<x<1), Sc₂O_{z}(0<z<3), TiO_{y}(0<y<2), ZrO_{y}(0<y<2), V₂O_{z}(0<z<3), WO_{y}(0<y<2), MnO_{y}(0<y<2), Fe₂O_{z}(0<z<3), Co₃O_{w}(0<w<4), PdOₓ(0<x<1), CuOₓ(0<x<1), AgOₓ(0<x<1), ZnOₓ(0<x<1), Sb₂O_{z}(0<z<3), and SeO_{y}(0<y<2). When the first metal oxide 31 is arranged in the matrix of the first carbon-based material 32, the homogeneity of the shell 30 arranged on the first core 10 or the second core 20 may be improved, and accordingly, the high-voltage resistance of the composite positive electrode active material 100 may be further improved. The shell 30 may include, for example, Al₂Oₓ (0<x<3) as the first metal oxide 31.

The shell 30 may further include at least one type of second metal oxide. The second metal oxide may be represented by, for example, formula MₐO_{c}(0<a≤3, 0<c≤4,and c is an integer when a is 1, 2, or 3), wherein M may be at least one metal selected from Groups 2 to 13, 15, and 16 of the periodic table of the elements. The second metal oxide may include, for example, the same metal as the first metal oxide 31. c/a, which is a ratio of c to a of the second metal oxide, may have a greater value than b/a, which is a ratio of b to a of the first metal oxide 31. For example, c/a >b/a. The second metal oxide may be arranged in the matrix of the first carbon-based material 32. The second metal oxide may be selected from Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide 31 may be, for example, a reduction product of the second metal oxide. The first metal oxide 31 may be obtained by partial or full reduction of the second metal oxide. Therefore, the first metal oxide 31 may have a lower content of oxygen and a lower metal oxidation number than the second metal oxide. For example, the shell 30 may include Al₂Oₓ (0<x<3) as the first metal oxide 31 and Al₂O₃ as the second metal oxide.

The shell 30 may include, for example, at least one selected from the first metal oxide and the second metal oxide, and a particle diameter of at least one selected from the first metal oxide and the second metal oxide may be, for example, 0.1 nm to 100 nm, 0.5 nm to 100 nm, 1 nm to 100 nm, 1 nm to 50 nm, 1 nm to 30 nm, 5 nm to 30 nm, or 10 nm to 30 nm. When the first metal oxide 31 and/or the second metal oxide has a particle diameter within the nanoranges above, the first metal oxide 31 and/or the second metal oxide may be more uniformly distributed in the matrix of the first carbon-based material 32. When the particle diameter of at least one of the first metal oxide 31 and the second metal oxide excessively increases, the thickness of the shell 30 may be increased, and thus the internal resistance of the composite negative electrode active material 100 may be increased. When the particle diameter of at least one of the first metal oxide 31 and the second metal oxide is excessively reduced, uniform dispersion may not be obtained.

The shell 30 may include the first metal oxide 31 and/or the second metal oxide, and may include the first carbon-based material 32. The first carbon-based material 32 may be arranged in a direction protruding from the surface of the first metal oxide 31 and/or the second metal oxide. The first carbon-based material 32 may be arranged in a direction protruding from the surface of the first metal oxide 31 and/or the second metal oxide by growing directly from the surface of the first metal oxide 31 and/or the second metal oxide. The first carbon-based material 32 arranged in a direction protruding from the surface of the first metal oxide 31 and/or the second metal oxide may be, for example, a carbon-based two-dimensional nanostructure, a carbon-based flake, or graphene.

The thickness of the shell 30 may be, for example, 0.1 nm to 5 µm, 0.5 nm to 5 µm, 1 nm to 5 µm, 1 nm to 1 µm, 1 nm to 500 nm, 1 nm to 200 nm, 1 nm to 100 nm, 1 nm to 50 nm, 1 nm to 30 nm, or 1 nm to 20 nm. When the thickness of the shell 30 is within the ranges above, the electronic conductivity of a dry negative electrode including the dry electrode may be further improved and the internal resistance thereof may be further reduced.

A content of the shell 30 may be, based on the total weight of the composite positive electrode active material 100, 0.01 wt% to 5 wt%, 0.01 wt% to 3 wt%, 0.01 wt% to 2 wt%, or 0.01 wt% to 1 wt%. A content of the first metal oxide 31 may be, based on the total weight of the composite positive electrode active material 100, 0.006 wt% to 3 wt%, 0.06 wt% to 1.8 wt%, 0.006 wt% to 1.2 wt%, or 0.006 wt% to 0.6 wt%. When the composite positive electrode active material 100 includes the shell 30 and the first metal oxide 31 within the ranges above, respectively, the cycle characteristics of a lithium battery including the composite positive electrode active material may be further improved.

The shell 30 may have a single-layer structure or a multi-layer structure. The multi-layer structure may include, for example, a two-layer structure, a three-layer structure, or a 4-layer structure. The multi-layer structure may have, for example, different types of metals in the first metal oxide 31 included in each layer.

The composite positive electrode active material 100 may further include, for example, a third metal doped on the first core 10 or the second core 20, or a third metal oxide applied onto the first core 10 or the second core 20. Then, the shell 30 may be arranged on the third metal doped on the first core 10 or the second core 20 or on the third metal oxide applied onto the first core 10 or the second core 20. For example, the shell 30 may be arranged after the third metal is doped on the surface of a compound included in the first core 10 or the second core 20, such as the first lithium transition metal oxide or the second lithium transition metal oxide, or after the third metal oxide is applied onto the surface of compound included in the first core 10 or the second core 20, such as the first lithium transition metal oxide or the second lithium transition metal oxide. The composite positive electrode active material 100 may include, for example: the core; an interlayer arranged on the first core 10 or the second core 20; and the shell 30 arranged on the interlayer, wherein the interlayer may further include the third metal or the third metal oxide. The third metal may be at least one metal selected from Al, Zr, W, and Co, and the third metal oxide may be Al₂O₃, Li₂O-ZrO₂, WO₂, CoO, Co₂O₃, Co₃O₄, or a combination thereof.

The shell 30 arranged over the surface of the first core 10 or second core 20 may be, for example, a dry coating layer. The shell 30 may be, for example, introduced into the first core 10 or the second core 20 by a dry method such as milling. The shell 30 arranged over the surface of the first core 10 or second core 20 may include, for example, the composite including the first metal oxide 31 and the first carbon-based material 32, such as graphene, and at least one of the milling results of the composite. The first metal oxide 31 may be arranged in a matrix of the first carbon-based material 32, such as a graphene matrix.

The shell 30 may be, for example, prepared using the composite including the first metal oxide 31 and the first carbon-based material 32, such as graphene. The composite may further include a second metal oxide, in addition to the first metal oxide 31. The composite may include, for example, at least two types of the first metal oxide 31. The composite may include, for example, at least two types of the first metal oxide 31 and at least two types of the second metal oxide.

A content of at least one of the composite and the milling products thereof may be, for example, 5 wt% or less, 3 wt% or less, 2 wt% or less, 1 wt% or less, or 0.5 wt% or less, based on the total weight of the composite positive electrode active material 100. The content of at least one of the composite and the milling product thereof may be 0.01 wt% to 5 wt%, 0.01 wt% to 3 wt%, 0.01 wt% to 1 wt%, 0.02 wt% to 1 wt%, or 0.05 wt% to 1 wt%, based on the total weight of the composite positive electrode active material 100. When the dry electrode active material includes at least one of the composite and the milling product thereof within the contents ranges above, the cycle characteristics of a lithium battery including the dry electrode active material may be further improved.

The composite may include at least one selected from the first metal oxide 31 and the second metal oxide. A particle diameter of at least one selected from the first metal oxide 31 and the second metal oxide may be 0.1 nm to 100 nm, 0.5 nm to 100 nm, 1 nm to 100 nm, 1 nm to 50 nm, 1 nm to 30 nm, 5 nm to 30 nm, or 10 nm to 30 nm. When the first metal oxide 31 and/or the second metal oxide has a particle diameter within the nanoranges above, the first metal oxide 31 and/or the second metal oxide may be more uniformly distributed in the matrix of the first carbon-based material 32 of the composite. Accordingly, the composite may be uniformly applied onto the core without aggregation, and then form the shell 30. Also, when the first metal oxide 31 and/or the second metal oxide has a particle diameter within the ranges above, the first metal oxide 31 and/or the second metal oxide may be more uniformly distributed on the core. Therefore, by uniformly arranging the first metal oxide 31 and/or the second metal oxide on the core, voltage resistance characteristics may be more effectively exhibited. The particle diameter of the first metal oxide 31 and/or the second metal oxide may be, for example, measured with a measurement device using a laser diffraction method or a dynamic light scattering method. The particle diameter may be, for example, measured with a laser scattering particle size distribution meter (e.g., LA-920 of Horiba Ltd.), and is a median particle diameter D50 value when 50 % of the particles have been accumulated in volume conversion from the smallest particles. A deviation of uniformity of at least one selected from the first metal oxide 31 and/or the second metal oxide may be 3 % or less, 2 % or less, or 1 % or less. The uniformity may be obtained by, for example, XPS. Therefore, at least one selected from the first metal oxide 31 and the second metal oxide may be uniformly distributed in the composite, while having a variation of 3 % or less, 2 % or less, or 1 % or less.

The composite may include the first carbon-based material 32. The first carbon-based material 32 may have, for example, a branched structure, and at least one selected from the first metal oxide 32 and the second metal oxide may be distributed in such a branched structure of the first carbon-based material 32. The branched structure of the first carbon-based material 32 may include, for example, a plurality of first carbon-based material particles contacting each other. When the first carbon-based material 32 has the branched structure, various conducting paths may be provided. The first carbon-based material 32 may be, for example, graphene. Graphene may have, for example, a branched structure, and at least one metal oxide selected from the first metal oxide and the second metal oxide may be distributed in the branched structure of graphene. The branched structure of graphene may include, for example, a plurality of graphene particles contacting each other. When graphene has the branched structure, various conducting paths may be provided.

The first carbon-based material 32 may have, for example, a spherical structure, and at least one metal oxide selected from the first metal oxide and the second metal oxide may be distributed in the spherical structure. The spherical structure of the first carbon-based material 32 may have a size of 50 nm to 300 nm. The first carbon-based material 32 having the spherical structure may be provided in plural. The spherical structure of the first carbon-based material 32 may allow the composite to have a rigid structure. The first carbon-based material 32 may be, for example, graphene. Graphene may have, for example, a spherical structure, and at least one metal oxide selected from the first metal oxide and the second metal oxide may be distributed in the spherical structure. The spherical structure of graphene may have a size of 50 nm to 300 nm. Graphene having the spherical structure may be provided in plural. When graphene has the spherical structure, the composite may have a rigid structure.

The first carbon-based material 32 may have, for example, a spiral structure in which a plurality of spherical structures are connected to each other, and at least one metal oxide selected from the first metal oxide and the second metal oxide may be distributed in the spherical structure of the spiral structure. The spiral structure of the first carbon-based material 32 may have a size of 500 nm to 100 µm. The spiral structure of the first carbon-based material 32 may allow the composite to have a rigid structure. The first carbon-based material 32 may be, for example, graphene. Graphene may have, for example, a spiral structure in which a plurality of spherical structures are connected, and at least one metal oxide selected from the first metal oxide and the second metal oxide may be distributed in the spherical structure of the spiral structure. The spiral structure of graphene may have a size of 500 nm to 100 µm. The spiral structure of graphene may allow the composite to have a rigid structure.

The first carbon-based material 32 may have, for example, a cluster structure in which a plurality of spherical structures are aggregated, and at least one metal oxide selected from the first metal oxide and the second metal oxide may be distributed in the spherical structures of the cluster structure. The cluster structure of the first carbon-based material 32 may have a size of 0.5 mm to 10 cm. The cluster structure of the first carbon-based material 32 may allow the composite to have a rigid structure. The first carbon-based material 32 may be, for example, graphene. Graphene may have, for example, a cluster structure in which a plurality of spherical structures are aggregated, and at least one metal oxide selected from the first metal oxide and the second metal oxide may be distributed in the spherical structure of the cluster structure. The cluster structure of the graphene may have a size of 0.5 mm to 10 cm. The cluster structure of the graphene may allow the composite to have a rigid structure.

The composite may have, for example, a crumpled faceted-ball structure, and at least one selected from the first metal oxide and the second metal oxide may be distributed inside the structure or on the surface of the structure. When the composite has such a faceted-ball structure, the composite may be easily applied onto irregular surface unevenness of the core.

The composite may have, for example, a planar structure, and at least one selected from the first metal oxide and the second metal oxide may be distributed inside structure or on the surface of the structure. When the composite has such a two-dimensional planar structure, the composite may be easily applied onto irregular surface unevenness of the core.

The first carbon-based material 32 may extend from the first metal oxide by a distance of 10 nm or less, and may include at least 1 to 20 carbon-based material layers. For example, when a plurality of first carbon-based material layers are laminated, the first carbon-based material 32 having a total thickness of 12 nm or less may be arranged on the first metal oxide. For example, a total thickness of the first carbon-based material 32 may be in 0.6 nm to 12 nm. The first carbon-based material 32 may be, for example, graphene. Graphene may extend from the first metal oxide by a distance of 10 nm or less, and may include at least 1 to 20 graphene layers. For example, when a plurality of graphene layers are laminated, graphene having a total thickness of 12 nm or less may be arranged on the first metal oxide. For example, a total thickness of graphene may 0.6 nm to 12 nm.

The shell 30 may further include, for example, a second carbon-based material 33 different from the first carbon-based material 32. The shell 30 may further include, for example, the second carbon-based material 33 which is fibrous carbon having an aspect ratio of 10 or more. Therefore, a conducting path of the composite positive electrode active material may be further lengthened. The second carbon-based material 33 forms a three-dimensional conductive network among a plurality of the composite positive electrode active materials 100 to reduce internal resistance of a positive electrode including the composite positive electrode active material. When fibrous carbon is fixed on the composite positive electrode active material 100, a uniform and stable three-dimensional conductive network may be formed among a plurality of the composite positive electrode active materials 100. Therefore, by including the second carbon-based material 33 in the composite positive electrode active material 100, a lithium battery including the composite positive electrode active material 100 may have improved high-rate characteristics. On the other hand, a simple mixture of the second carbon-based material 33, which is fibrous carbon, with the first core 10 or the second core 20 is difficult to form a uniform three-dimensional conductive network between a plurality of particles of the first core 10 or second core 20 due to aggregation of the fibrous carbon. The second carbon-based material 33 may be arranged on the surface of the composite positive electrode active material 100.

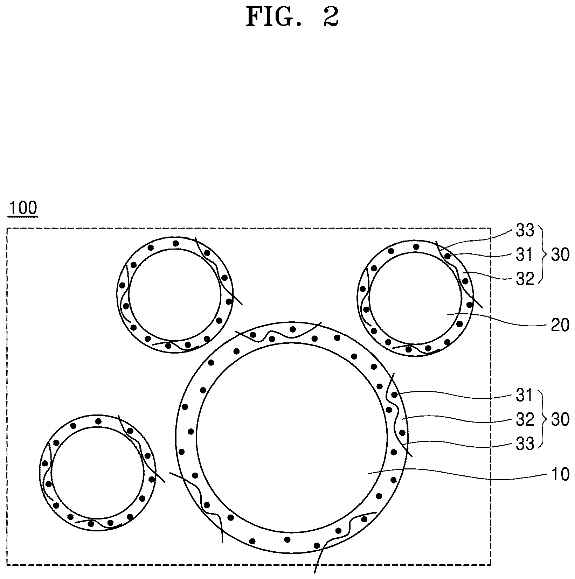

Referring to FIG. 2, the composite positive electrode active material 100 includes: the first core 10; the second core 20; and the shell 30 arranged continuously or discontinuously along a surface of at least one of the first core 10 and the second core 20. The shell 30 may cover all or part of the first core 10 and the second core 20. The shell 30 may include the first metal oxide 31, the first carbon-based material 32, and the second carbon-based material 33. The second carbon-based material 33 may be protruded from the surface of the composite positive electrode active material 100. The second carbon-based material 33 may then effectively provide a conductive network between the plurality of the composite positive electrode active materials 100. When the second carbon-based material 33 is arranged in the matrix of the first carbon-based material 32, the second carbon-based material 33 may be easily applied onto the first core 10 or the second core 20. The matrix of the first carbon-based material 32 may serve as a binder agent that binds the second carbon-based material 33 to the first core 10 or the second core 20. Therefore, in the absence of the matrix of the first carbon-based material 32, the second carbon-based material 33 may not be easily attached to the first core 10 or the second core 20, or the second carbon-based material 33 may be easily detached from the first core 10 or the second core 20 during a preparation process of slurry for a positive electrode. When a binder for binding of the second carbon-based material 33 to the first core 10 or the second core 20 is additionally added, the first core 10 or the second core 20 may be coated by an insulating binder, thereby increasing internal resistance of the composite positive electrode active material 100. To carbonize the binder, the first core 10, the second core 20, and the second carbon-based material 33 may be deteriorated during a heat treatment process, when the core coated with the second carbon-based material 33 and the binder is subjected to heat treatment at a high temperature.

Here, the second carbon-based material 33 may have an aspect ratio of 10 or greater or 20 or greater. The aspect ratio of the second carbon-based material 33 may be, for example, 10 to 100,000, 10 to 80,000, 10 to 50,000, 10 to 10,000, 10 to 5000, 10 to 1000, 10 to 500, 10 to 100, or 10 to 50. The aspect ratio of the second carbon-based material 33 may be, for example, the ratio of the length of the major axis, for example, the length of the second carbon-based material 33, passing through the center of the second carbon-based material 33 to the length of the minor axis, for example, the diameter of the second-based material 33, passing through the center of the second carbon-based material 33 and perpendicular to the major axis.

The diameter of the second carbon-based material 33 may be, for example, 50 nm or less, 30 nm or less, 20 nm or less, or 10 nm or less. The diameter of the second carbon-based material 33 may be, for example, 1 nm to 50 nm, 1 nm to 30 nm, or 1 nm to 10 nm. When the diameter of the second carbon-based material 33 is excessively large, the absolute number of strands per volume may decrease, and thus the effect of reducing the internal resistance may be insignificant. When the diameter of the second carbon-based material 33 is too small, uniform dispersion may be difficult.

The length of the second carbon-based material 33 may be, for example, 1000 µm or less, 100 µm or less, 50 µm or less, 10 µm or less, 5 µm or less, 2 µm or less, 1 µm or less, 500 nm or less, or 300 nm or less. The length of the second carbon-based material 33 may be, for example, 100 nm to 1000 µm, 100 nm to 500 µm, 100 nm to 100 µm, 100 nm to 50 µm, 100 nm to 10 µm, 100 nm to 5 µm, 100 nm to 2 µm, 100 nm to 1 µm, 100 nm to 500 nm, or 100 nm to 300 nm. The length of the second carbon-based material 33 may be, for example, 500 nm to 1000 µm, 500 nm to 500 µm, 500 nm to 100 µm, 500 nm to 50 µm, 500 nm to 10 µm, 500 nm to 5 µm, or 500 nm to 2 µm. As the length of the second carbon-based material 33 increases, the internal resistance of an electrode may decrease. When the length of the second carbon-based material 33 is too short, an effective conducting path may not be provided.

The second carbon-based material 33 may include, for example, carbon nanofibers, carbon nanotubes, or a combination thereof.

The carbon nanotube may include, for example, a primary carbon nanotube structure, a secondary carbon nanotube structure formed by aggregation of multiple particles of the primary carbon nanotube structure, or a combination thereof.

The primary carbon nanotube structure may be a single carbon nanotube unit. The carbon nanotube unit may include a graphite sheet in a cylindrical shape with a nano-sized diameter, and may have an sp2 hybridized structure. The characteristics of conductors or the characteristics of semiconductors may be exhibited depending on a bending angle and a structure of the graphite sheet. The carbon nanotube unit may be classified, depending on the number of bonds consisting a wall, into a single-walled carbon nanotube (SWCNT), a double-walled carbon nanotube (DWCNT), multi-walled carbon nanotube (MWCNT), and the like. As the wall thickness of the carbon nanotube structure unit is small, the resistance may be lowered.

The primary carbon nanotube structure may include, for example, an SWCNT, a DWCNT, an MWCNT, or a combination thereof. A diameter of the primary carbon nanotube structure may be, for example, 1 nm or more or 2 nm or more. The diameter of the primary carbon nanotube structure may be, for example, 20 nm or less or 10 nm or less. The diameter of the primary carbon nanotube structure may be for example, 1 nm to 20 nm, 1 nm to 15 nm, or 1 nm to 10 nm. A length of the primary carbon nanotube structure may be, for example, 100 nm or more or 200 nm or more. The length of the primary carbon nanotube structure may be, for example, 2 µm or less, 1 µm or less, 500 nm or less, or 300 nm or less. The length of the primary carbon nanotube structure may be, for example, 100 nm to 2 µm, 100 nm to 1 µm, 100 nm to 500 nm, 100 nm to 400 nm, 100 nm to 300 nm, or 200 nm to 300 nm. The diameter and length of the primary carbon nanotube structure may be measured from a scanning electron microscope (SEM) image or a transmission electron microscope (TEM) image. Alternatively, the diameter and/or length of the primary carbon nanotube structure may be measured by a laser diffraction method.

The secondary carbon nanotube structure may be a structure formed by assembling the primary carbon nanotube structures, either entirely or partially, in a bundled form or a clustered form. The secondary carbon nanotube structure may include, for example, bundle-type carbon nanotubes, rope-type carbon nanotubes, or a combination thereof. A diameter of the secondary carbon nanotube structure may be, for example, 2 nm or more or 3 nm or more. The diameter of the secondary carbon nanotube structure may be, for example, 50 nm or less, 30 nm or less, 20 nm or less, or 10 nm or less. The diameter of the secondary carbon nanotube structure may be, for example, 2 nm to 50 nm, 2 nm to 30 nm, or 2 nm to 20 nm. The length of the secondary carbon nanotube structure may be, for example, 500 nm or more, 700 nm or more, 1 µm or more, or 10 µm or more. The length of the secondary carbon nanotube structure may be, for example, 1000 µm or less, 500 µm or less, or 100 µm or less. The length of the secondary carbon nanotube structure may be, for example, 500 nm to 1000 µm, 500 nm to 500 µm, 500 nm to 200 µm, 500 nm to 100 µm, or 500 nm to 50 µm. The diameter and length of the secondary carbon nanotube structure may be measured from an SEM image or an optical microscope image. Alternatively, the diameter and/or length of the secondary carbon nanotube structure may be measured by a laser diffraction method.

The secondary carbon nanotube structure may be, for example, dispersed in a solvent to be converted into the primary carbon nanotube structure, which may then be used in the manufacture of the composite positive electrode active material 100.

A content of the second carbon-based material 33 may be, for example, 0.1 wt% to 50 wt%, 1 wt% to 40 wt%, or 5 wt% to 30 wt% based on the total weight of the first carbon-based material 32 and the second carbon-based material 33. When the composite positive electrode active material 100 includes the first carbon-based material 32 and the second carbon-based material 33 within the ranges above, a conduction path may be further effectively secured in the composite positive electrode active material 100, thereby further reducing the internal resistance of the composite positive electrode active material 100. Consequently, the cycle characteristics a lithium battery including the composite positive electrode active material 100 may be further improved. A content of the second carbon-based material 33 may be, for example, 0.001 wt% to 5 wt%, 0.01 wt% to 3 wt%, 0.01 wt% to 1 wt%, 0.01 wt% to 0.5 wt%, or 0.01 wt% to 0.1 wt%, based on the total weight of the composite positive electrode active material 100. When the composite positive electrode active material 100 includes the second carbon-based material 33 within the ranges above, a conduction path may be secured in the composite positive electrode active material 100, thereby further reducing the internal resistance of the composite positive electrode active material 100. Consequently, the cycle characteristics a lithium battery including the composite positive electrode active material 100 may be further improved.

The shell 30 may include the first metal oxide 31 and the first carbon-based material 32, the first core 10 may include the first lithium transition metal oxide, and the second core 20 may include the second lithium transition metal oxide. The first carbon-based material 32 and a transition metal of the first lithium transition metal oxide or second lithium transition metal oxide may be, for example, chemically bound through a chemical bond. A carbon atom (C) of the first carbon-based material 32 and the transition metal (Me) of the first lithium transition metal oxide or second lithium transition metal oxide may be, for example, chemically bound through an oxygen atom-mediated C-O-Me bond (e.g., a C-O-Ni bond or a C-O-Co bond). When the first carbon-based material 32 arranged on the shell 30 is chemically bound with the first lithium transition metal oxide arranged on the first core or the second lithium transition metal oxide arranged on the second core through a chemical bond, the shell 30 may be form a composite with the first core 10 or the second core 20. Therefore, the composite positive electrode active material 100 is distinct from a simply physical mixture or blend of the first carbon-based material 32 and the first lithium transition metal oxide and/or the second lithium transition metal oxide. The first metal oxide and the first carbon-based material 32 may be also chemically bound through a chemical bond. Here, the chemical bond may be, for example, a covalent bond or an ionic bond.

### [Positive Electrode]

A positive electrode according to another embodiment includes: a positive electrode current collector; and a positive electrode active material layer on one side or both sides of the positive electrode current collector and including the composite positive electrode active material.

### [Positive electrode: positive electrode current collector]

The positive electrode current collector may include, for example a metal layer.

A material constituting the metal layer may be a material that does not react with lithium, i.e., any metal or alloy that is conductive and does not form an alloy or compound with lithium. The metal layer may consist of, for example, indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof. The metal layer may have, for example, a shape selected from a sheet, a foil, a film, a plate, a porous body, a mesoporous body, a through-hole containing body, a polygonal ring body, a meshed body, a foaming body, and a non-woven body, but is not limited thereto. Any shape available in the art may be used.

The positive electrode current collector may include, for example, a base film and a metal layer arranged on one side or both sides of the base film. The base film may include, for example, a polymer. The polymer may include, for example, polyethylene terephthalate (PET), polyethylene (PE), polypropylene (PP), polybutylene terephthalate (PBT), polyimide (PI), or combinations thereof. The metal layer may include, for example, In, Cu, Mg, stainless steel, Ti, Fe, Co, Ni, Zn, Al, Ge, Li, or an alloy thereof. When the positive electrode current collector has the aforementioned structure, the weight of an electrode may be reduced, thereby improving energy density of an all-solid-state secondary battery.

The positive electrode current collector may include, for example: the metal layer; and an interlayer arranged between the metal layer and the positive electrode active material layer. The interlayer may include, for example, a carbon-based conductive material.

The interlayer may be, for example, directly arranged on one side or both sides of the metal layer. Accordingly, other layers may not be arranged between the metal layer and the interlayer. When the interlayer is directly arranged on one side or both sides of the metal layer, adhesion between the metal layer and the positive electrode active material layer may be further improved.

A thickness of the interlayer may be, for example, 0.01 to 30 %, 0.1 to 30 %, 0.5 to 30 %, 1 to 25 %, 1 to 20 %, 1 to 15 %, 1 to 10 %, 1 to 5 %, or 1 to 3 %, based on a thickness of the metal layer. The thickness of the interlayer may be, for example, 10 nm to 5 µm, 50 nm to 5 µm, 200 nm to 4 µm, 500 nm to 3 µm, 500 nm to 2 µm, 500 nm to 1.5 µm, or 700 nm to 1.3 µm. When the thickness of the interlayer is within the ranges above, the adhesion between the metal layer and the positive electrode active material layer may be further improved, and an increase in the interfacial resistance may be suppressed.

The interlayer may include, for example, a carbon-based conductive material. The carbon-based conductive material included in the interlayer may be selected from carbon-based conductive materials included in the positive electrode active material layer. The interlayer may include the same carbon-based conductive material as the carbon-based conductive materials included in the positive electrode active material layer. When the interlayer includes a carbon-based conductive material, the interlayer may become, for example, a conductive layer.

The interlayer may further include, for example, a binder. When the interlayer further includes a binder, the adhesion between the metal layer and the positive electrode active material layer may be further improved. The binder included in the interlayer may be, for example, a conductive binder or a non-conductive binder. The conductive binder may be, for example, an ion conductive binder and/or an electron conductive binder. A binder having both ion conductivity and electron conductivity may belong to both the ion conductive binder and the electron conductive binder.

The binder included in the interlayer may be, for example, selected from binders included in the positive electrode active material layer. The interlayer may include the same binder as the binders included in the positive electrode active material layer. The binder included in the interlayer may be, for example, a fluorine-based binder. The fluorine-based binder included in the interlayer may be, for example, PVDF. The interlayer may be, for example, a bonding layer including the binder. The interlayer may be, for example, a conductive layer including both the binder and the carbon-based conductive material.

The interlayer may be, for example, arranged on the metal layer by a dry method or a wet method. The interlayer may be, for example, arranged on the metal layer by a dry method using deposition such as CVD, PVD, and the like. The interlayer may be, for example, arranged on the metal layer by a wet method using spin coating, dip coating, and the like. The interlayer may be, for example, arranged on the metal layer by arranging the carbon-based conductive material on the metal layer by a means of deposition. A dry-coated interlayer may consist of the carbon-based conductive material, and may not include the binder. The interlayer may be, for example, arranged on the metal layer by coating the surface of the metal layer with a composition including the carbon-based conductive material, the binder, and a solvent, and then drying the resulting surface. The interlayer may have a single-layer structure, or may be a multi-layer structure including multiple layers. The multi-layer structure may be a two-layer structure, a three-layer structure, or a 4-layer structure.

For example, the positive electrode may be a dry positive electrode or a wet positive electrode.

The positive electrode active material layer included in the dry positive electrode may be manufactured by a dry manufacturing method, and the composite positive electrode active material having the aforementioned core/shell structure may be a dry positive electrode film. When the positive electrode includes the dry positive electrode film, the internal resistance of the dry positive electrode may be reduced, thereby improving mechanical properties. The dry positive electrode film may be arranged on the positive electrode current collector through a laminating process.

### [Positive electrode: Dry positive electrode]

The dry positive electrode film may include a dry binder. The dry binder may be, for example, a binder that is not impregnated, dissolved, or dispersed in a processing solvent in the process of manufacturing the dry positive electrode film. The dry binder may be, for example, a binder that does not include or contact with a processing solvent in the process of manufacturing the dry positive electrode film. The dry binder may be, for example, a fibrillized binder or a fibrous binder. The fibrillized binder or the fibrous binder may serve as a matrix that supports and binds an electrode active material included in an electrode active material layer to other components. The fibrillized binder or the fibrous binder may be, for example, determined to have a fibrous form from an SEM image of a cross section of an electrode. The fibrillized binder or the fibrous binder may have, for example, an aspect ratio of 10 or more, 20 or more, 50 or more, or 100 or more.

Examples of the dry binder include, PTFE, a PVDF-HFP copolymer, PVDF, polyvinyl alcohol, polyacrylonitrile, carboxymethylcellulose (CMC), starch, hydroxypropyl cellulose, cellulose, polyvinyl pyrrolidone, polyethylene, polypropylene, an ethylenepropylene-diene polymer (EPDM), a sulfonated-EPDM, a styrene butadiene rubber (SBR), a fluoro rubber, a copolymer thereof, and the like, but are not necessarily limited thereto. Any binder used in the manufacture of the dry positive electrode may be used. The dry binder may include, specifically, a fluorine-based binder. The fluorine-based binder may be, for example, PTFE, a PVDF-HFP copolymer, or PVDF.

A glass transition temperature (T_{g}) of the dry binder may be, for example, -30 °C to 150 °C, 15 °C to 150 °C, 15 °C to 130 °C, 50 °C to 130 °C, 100 °C to 130 °C, or 120 °C to 130 °C. The glass transition temperature T_{g} of the dry binder may be, for example, - 30 °C to 150 °C, -30 °C to 100 °C, -30 °C to 50 °C, -30 °C to 15 °C -30 °C to -10 °C, or - 30 °C to -20 °C. A glass transition temperature T_{g} of the PTFE may be, for example, 120 °C to 130 °C. When the glass transition temperature T_{g} of the dry binder is within the ranges above, the fibrillized binder or the fibrous binder may be obtained more easily in the process of manufacturing the dry positive electrode.

A content of the dry binder may be, for example, 0.1 to 5 wt%, 0.5 to 5 wt%, or 1 to 5 wt%, based on the total weight of the dry positive electrode film. When the dry positive electrode film includes the dry binder within the content ranges above, adhesion of the dry positive electrode film may be improved, and the dry positive electrode film may maintain high energy density.

The dry positive electrode film may further include, for example, a dry conductive material. The dry conductive material may be, for example, a conductive material that is not impregnated, dissolved, or dispersed in a processing solvent in the process of manufacturing the dry positive electrode film. The dry conductive material may be, for example, a conductive material that does not include or contact with a processing solvent in the process of manufacturing the dry positive electrode film. The dry conductive material may be, for example, a carbon-based conductive material. The carbon-based conductive material may include, for example, a fibrous carbon-based material having an aspect ratio of 10 or more, a particulate carbon-based material having an aspect ratio of less than 10, or a combination thereof.

Examples of the fibrous carbon-based material having the aspect ratio of 10 or more include carbon fibers, carbon nanotubes, carbon nanobelts, and the like, but are not limited thereto. Any material available as the carbon-based conductive material in the art may be used. The fibrous carbon-based material having the aspect ratio of 10 or more may be selected from the second carbon-based material. The fibrous carbon-based material conductive material is simply mixed with the composite positive electrode active material, and in this regard, may be distinguished from the second carbon-based material that constitutes a part of the composite positive electrode active material.

Examples of the carbon-based material having the aspect ratio of less than 10 are carbon black, acetylene black, ketjen black, natural graphite, artificial graphite, and the like, but are not limited thereto. Any material available as the carbon-based conductive material in the art may be used. An aspect ratio of the particulate carbon-based material may be, for example, 1 to 7, 1 to 5, 1 to 3, or 1 to 2.

A content of the dry conductive material included in the dry positive electrode film may be, for example, 0.1 to 5 wt%, 0.5 to 5 wt%, or 1 to 5 wt%, based on the total weight of the dry positive electrode film. When the dry positive electrode film includes the dry conductive material within the content ranges above, the conductivity of the dry positive electrode film may be improved, thereby improving cycle characteristics of a lithium battery including the dry positive electrode film.

The dry positive electrode film may be, for example, a self-standing film. The dry positive electrode film may, for example, maintain the shape of the film without a support. Therefore, the dry positive electrode film may be prepared as a separate self-standing film, and then arranged on the positive electrode current collector. The dry positive electrode film is manufactured in a dry process, and therefore, may not include a processing solvent that is intentionally added. For example, the dry positive electrode film may not include a residual processing solvent. Unintended trace contents of solvent may remain in the dry positive electrode film, but these solvents are not intentionally added processing solvents. Therefore, the dry positive electrode film may be distinguished from a wet electrode film prepared by mixing the components and a processing solvent and then removing some or all of the processing solvent by drying.

A tensile strength of the dry positive electrode film may be, for example, 500 kPa or more, 700 kPa or more, or 1000 kPa or more, at 25 °C. The tensile strength of the dry positive electrode film may be, for example, 500 kPa to 5000 kPa, 700 kPa to 5000 kPa, or 1000 kPa to 5000 kPa, at 25 °C. When the dry positive electrode film has the tensile strength within the ranges above, structural stability of the dry positive electrode film may be improved. Therefore, during a charging and discharging process, the dry positive electrode film may improve reversibility of an electrode reaction while maintaining a stable three-dimensional conductive network. When the dry positive electrode film has a high tensile strength within the ranges above, mechanical intensity of the dry positive electrode film may be improved. As the dry positive electrode film has improved mechanical intensity, local deterioration due to volume changes during charging and discharging of an electrode including the dry positive electrode film and a lithium battery including the electrode may be suppressed. Consequently, cycle characteristics of the lithium battery may be improved.

### [Positive electrode: Wet positive electrode]

The positive electrode active material layer included in a wet positive electrode may be manufactured by a wet manufacturing method, and may be a wet positive electrode active material layer including the composite positive electrode active material. For example, the wet positive electrode active material layer may be arranged on the positive electrode current collector by applying a composition including the composite positive electrode active material having the aforementioned core/shell structure, a wet binder, a wet conductive material, and a solvent onto the surface of the positive electrode current collector surface, and then drying the composition.

Examples of the dry conductive material are carbon black, graphite particulates, natural graphite, artificial graphite, acetylene black, ketjen black, carbon fibers; carbon nanotubes; metallic powder, metallic fibers, or metallic tubes of copper, nickel, aluminum, silver, and the like; a conductive polymer such as a polyphenylene derivative, and the like, but are not limited thereto. Any material available as the conductive material in the art may be used.

Examples of the wet binder are a vinylidene fluoride/hexafluoropropylene copolymer, polyvinylidene fluoride, polyacrylonitrile, polymethyl methacrylate, PTFE, a mixture of the aforementioned polymers, a styrene butadiene-rubber polymer, and the like. Examples of the solvent are N-methyl pyrrolidone (NMP), acetone, water, and the like. However, examples are not limited thereto, and any material available as the wet binder and the solvent in the art may be used.

A plasticizer or a pore-forming agent may be added to the positive electrode active material composition to form pores inside a positive electrode active material layer.

Contents of the composite positive electrode active material used in the wet positive electrode, a wet conductive material, a wet binder, and a solvent may be at levels suitable for use in lithium batteries in the art. Depending on the use and configuration of the lithium battery, at least one of the dry conductor, the dry binder, and the solvent may be omitted.

A content of the wet binder included in the wet positive electrode may be 0.1 to 10 wt% or 0.1 to 5 wt%, based on the total weight of the positive electrode active material layer. A content of the composite positive electrode active material included in the wet positive electrode may be 90 wt% to 99 wt% or 95 wt% to 99 wt%, based on the total content of the composite positive electrode active material layer.

The composite positive electrode active material includes the first core and the second core, each including the first lithium transition metal oxide and the second lithium transition metal oxide, and the shell arranged on the surface of the first core or the surface of the second core includes the first metal oxide and the first carbon-based material.

The positive electrode active material layer may further include a general positive electrode active material, in addition to the dry positive electrode active material having the core/shell structure. For use as the general positive electrode active material further added, any material available as the positive electrode active material in the art may be used without limitation.

The positive electrode active material may use, for example, at least one composite oxide of lithium and a metal selected from Co, Mn, Ni, and a combination thereof, and a specific example of the composite oxide is a compound represented by one of the following formulae: LiₐA_{1-b}B_{b}D₂ (0.90 ≤ a ≤ 1 and 0 ≤ b ≤ 0.5); LiₐE_{1-b}B_{b}O_{2-c}D_{c} (0.90 ≤ a ≤ 1, 0 ≤ b ≤ 0.5, and 0 ≤ c ≤ 0.05); LiE_{2-b}B_{b}O_{4-c}D_{c} (0 ≤ b ≤ 0.5 and 0 ≤ c ≤ 0.05); LiₐNi_{1-b-c}Co_{b}B_{c}Dₐ (0.90 ≤ a ≤ 1, 0 ≤ b ≤ 0.5, 0 ≤ c ≤ 0.05, and 0 < α ≤ 2); LiₐNi_{1-b-c}Co_{b}B_{c}O₂-_{α}F_{α} (0.90 ≤ a ≤ 1, 0 ≤ b ≤ 0.5, 0 ≤ c ≤ 0.05, and 0 < α < 2); LiₐNi_{1-b-c}Co_{b}B_{c}O₂₋ₐF₂ (0.90 ≤ a ≤ 1, 0 ≤ b ≤ 0.5, 0 ≤ c ≤ 0.05, and 0 < α < 2); LiₐNi_{1-b-c}Mn_{b}B_{c}Dₐ (0.90 ≤ a ≤ 1, 0 ≤ b ≤ 0.5, 0 ≤ c ≤ 0.05, and 0 < α ≤ 2); LiₐNi_{1-b-c}Mn_{b}B_{c}O_{2-α}F_{α} (0.90 ≤ a ≤ 1, 0 ≤ b ≤ 0.5, 0 ≤ c ≤ 0.05, and 0 < α < 2); LiₐNi_{1-b-c}Mn_{b}B_{c}O_{2-α}F₂ (0.90 ≤ a ≤ 1, 0 ≤ b ≤ 0.5, 0 ≤ c ≤ 0.05, and 0 < α < 2); LiₐNi_{b}E_{c}G_{d}O₂ (0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GeO₂ (0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (0.90 ≤ a ≤ 1 and 0.001 ≤ b ≤ 0.1); LiₐCoG_{b}O₂ (0.90 ≤ a ≤ 1 and 0.001 ≤ b ≤ 0.1); LiₐMnG_{b}O₂ (0.90 ≤ a ≤ 1 and 0.001 ≤ b ≤ 0.1); LiₐMn₂GbO₄ (0.90 ≤ a ≤ 1 and 0.001 ≤ b ≤ 0.1); QO₂; QS₂; LiQS2; V₂O₅; LiV₂O₅; LilO₂; LiNiVO₄; Li_{(3-f)}J₂(PO₄)₃ (0 ≤ f ≤ 2); Li₍₃₋ᵣ₎Fe₂(PO₄)₃ (0 ≤ f ≤ 2); and LiFePO₄.

In the formulae above representing the compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

A compound in which a coating layer is additionally provided on the surface of the aforementioned compound may be also used, and a mixture of the aforementioned compound and a compound additionally provided with a coating layer may be also used. The coating layer provided on the surface of the compound may include, for example, a coating element compound, such as an oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the positive electrode active material. The coating method may be, for example, spray coating, dipping method, or the like. A detailed description of the coating method will be omitted because it may be well understood by those skilled in the art.

### [Lithium battery]

A lithium battery according to another embodiment may include: the positive electrode; a negative electrode; and an electrolyte arranged between the positive electrode and the negative electrode.

When the lithium battery includes the positive electrode having reduced internal resistance and improved mechanical properties, cycle characteristics of the lithium battery may be improved.

The lithium battery may include, for example, a dry positive electrode, a dry negative electrode, or both a dry positive electrode and a dry negative electrode. The lithium battery may include, for example: a dry positive electrode and a wet negative electrode; a dry positive electrode and a dry negative electrode; a wet positive electrode and a dry negative electrode; or a wet positive electrode and a wet negative electrode.

### [Lithium battery: Electrolyte]

The lithium battery includes an electrolyte, and the electrolyte may include, for example, a liquid electrolyte, a solid electrolyte, or a combination thereof.

The electrolyte, for example, a liquid electrolyte, may be, for example, an organic electrolyte solution. The organic electrolyte solution may be, for example, prepared by dissolving a lithium salt in an organic solvent.

For use as the organic solvent, any material available as the organic solvent in the art may be used. Examples of the organic solvent are propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, y-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof. organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

For use as the lithium salt, any material available as the lithium salt in the art may be also used. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are natural numbers), LiCl, Lil, or a mixture thereof.

The solid electrolyte may include, for example, an inorganic solid electrolyte, an organic solid electrolyte, an organic-inorganic composite solid electrolyte, or a combination thereof.

The solid electrolyte may include, for example, an oxide-based solid electrolyte, a sulfide-based solid electrolyte, a polymer-based solid electrolyte, or a combination thereof.

Examples of the solid electrolyte are boron oxide, lithium oxynitride, and the like, but are not limited thereto. Any suitable solid electrolyte available in the art may be used. The solid electrolyte may be, for example, formed on the negative electrode by a sputtering method or the like, or a separate solid electrolyte sheet may be laminated on the negative electrode.

Examples of the oxide-based solid electrolyte are Li_{1+x+y}AlₓTi₂₋ₓSi_{y}P_{3-y}O₁₂ (0<x<2, 0≤y<3), BaTiO₃, Pb(Zr,Ti)Os (PZT), Pb₁₋ₓLaₓZr_{1-y} Ti_{y}O₃ (PLZT, 0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂ (0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, 0≤x≤10), Li₃₊ₓLa₃Zr_{2-y}M_{y}O₁₂ (M doped LLZO, M=Ga, W, Nb, Ta, Al, or a combination thereof, 0≤x≤10, 0<y<2), Li₇La₃Zr₂₋ₓTaₓO₁₂ (0<x<2, LLZ-Ta), or a combination thereof. The oxide-based solid electrolyte may be, for example, a garnet-type solid electrolyte. The oxide-based solid electrolyte may be manufactured by a sintering method or the like.

Examples of the oxide-based solid electrolyte are Li₇La₃Zr₂O₁₂(LLZO), Li_{6.5}La₃Zr_{1.5}Ta_{0.5}O₁₂, Li_{1.3}Al_{0.3}Ti_{1.7}(PO₄)₃, Li_{0.34}La_{0.51}TiO_{2.94}, Li_{1.07}Al_{0.69}Ti_{1.46}(PO₄)₃, 50Li₄SiO₄-50Li₂BO₃, 90Li₃BO₃-10Li₂SO₄, Li_{2.9}PO_{3.3}N_{0.46}, or a combination thereof.

The sulfide-based solid electrolyte may include, for example, one or more selected from: Li₂S-P₂S₅, Li₂S-P₂S₅-LiX (X is a halogen atom), Li₂S-P₂S₅-Li₂O, Li₂S-P₂S₅-Li₂O-Lil, Li₂S-SiS₂, Li₂S-SiS₂-Lil, Li₂S-SiS₂-LiBr, Li₂S-SiS₂-LiCl, Li₂S-SiS₂-B₂S₃-Lil, Li₂S-SiS₂-P₂S₅-Lil, Li₂S-B₂S₃, Li₂S-P₂S₅-ZₘSₙ (m and n are positive numbers, and Z is one of Ge, Zn, and Ga), Li₂S-GeS₂, Li₂S-SiS₂-Li₃PO₄, Li₂S-SiS₂-LiₚMO_{q} (p and q are positive numbers, and M is one of P, Si, Ge, B, Al, Ga, and In), Li₇₋ₓPS₆₋ₓClₓ, (where 0≤x≤2), Li₇₋ₓPS₆₋ₓBrₓ, (0≤x≤2), and Li₇₋ₓPS₆₋ₓIₓ (0≤x≤2). The sulfide-based solid electrolyte may be, for example, prepared by treating a starting material, such as Li₂S, P₂S₅, and the like, by a melting quenching method, a mechanical milling method, or the like. After such treatment, heat treatment may be then performed thereon. The sulfide-based solid electrolyte may be amorphous or crystalline, or may be in a mixed state.

The sulfide-based solid electrolyte may include, for example, an argyrodite-type solid electrolyte represented by Formula 9:

Formula 9 Li⁺₁₂₋ₙ₋ₓAⁿ⁺X²⁻₆₋ₓY⁻x.

wherein, in the formula, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, 1≤n≤5, and 0≤x≤2.

The sulfide-based solid electrolyte may be an argyrodite-type compound including at least one selected from Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). In particular, the sulfide-based solid electrolyte included in the solid electrolyte may be an argyrodite-type compound including at least one selected from Li₆PS₅Cl, Li₆PS₅Br, and Li₆PS₅I.

The polymer-based solid electrolyte may be, for example, a solid electrolyte including polymeric ionic liquid and a lithium salt, a solid electrolyte including polymeric ionic liquid and a lithium salt, or a combination thereof.

The ion conductive polymer may be a polymer including an ionic conductive repeating unit in the main chain or side chains. The ion conductive repeating unit may be a unit having ion conductivity, and may be, for example, an alkylene oxide unit or a hydrophilic unit. The ion conductive repeating unit may be a unit having ion conductivity, and may be, for example, an alkylene oxide unit or a hydrophilic unit. Examples of the ion conductive polymer are polyethylene oxide, polypropylene oxide, polymethyl methacrylate, polyethyl methacrylate, polydimethyl siloxane, polyacrylic acid, polymethacrylic acid, polymethyl acrylate, polyethyl acrylate, poly2-ethylhexyl acrylate, polybutyl methacrylate, poly2-ethylhexyl methacrylate, polydecyl acrylate, polyethylene vinylacetate, or a combination . The ion conductive polymer may be, for example, polyethylene oxide (PEO), polyvinyl alcohol (PVA), polyvinyl pyrrolidone (PVP), polyvinylsulfone, or a combination thereof.

The polymeric ionic liquid (PIL) may include, for example, a repeating unit including: i) at least one cation selected from the ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazole-based cations, and a mixture thereof; ii) at least one anion selected from BF₄-, PF₆-, AsF₆-, SbF₆-, AlCl₄-, HSO₄-, ClO₄-, CH₃SO₃-, CF₃CO₂-, (CF₃SO₂)₂N-, Cl-, Br-, I-, BF₄-, SO₄⁻, PF₆-, ClO₄-, CF₃SO₃-, CF₃CO₂-, (C₂F₅SO₂)₂N-, (C₂F₅SO₂)(CF₃SO₂)N-, NO₃⁻, Al₂Cl₇⁻ , AsF₆⁻, SbF₆⁻, CF₃COO⁻, CH₃COO⁻, CF₃SO₃⁻, (CF₃SO₂)₃C⁻, (CF₃CF₂SO₂)₂N⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, (O(CF₃)₂C₂(CF₃)₂O)₂PO⁻, and (CF₃SO₂)₂N-. The PIL may be, for example, poly(diallyldimethylammonium)(trifluoromethane sulfonyl)imide (poly(diallyldimethylammonium)TFSI), poly(1-allyl-3-methylimidazolium trifluoromethane sulfonylimide), poly((N-methyl-N-propylpiperidinium bis(trifluoromethanesulfonyl)imide)), or a combination thereof.

The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(1≤x≤20 and 1≤y≤20), LiCl, Lil, or a combination thereof.

### [Dry positive electrode: Manufacturing method]

Another embodiment provides a method of manufacturing a dry positive electrode.

The method of manufacturing a dry positive electrode includes: providing a dry positive electrode film; and arranging a dry positive electrode film on one side or both sides of a positive electrode current collector.

The providing of the dry positive electrode film may include: dry-mixing the aforementioned composite positive electrode active material, a dry conductive material, and a dry binder to prepare a dry mixture; and molding the dry mixture to prepare a dry positive electrode film.

First, the aforementioned composite positive electrode active material, the dry conductive material, and the dry binder are dry-mixed to prepare the dry mixture. For example, the dry mixture in which the composite positive electrode active material, the dry conductive material, and the dry binder are mixed is prepared.

The dry-mixing refers to mixing in a state that does not include a processing solvent. The processing solvent refers to, for example, a solvent used in the preparation of an electrode slurry. The processing solvent may be, for example, water, NMP, and the like, but is not limited thereto. Any processing solvent used in the preparation of an electrode slurry may be used without limitation. The dry-mixing may be, for example, performed using a stirrer at a temperature of 15 °C to 65 °C and at a rotation speed of 10 to 10000 rpm. The dry-mixing may be, for example, performed using a stirrer for 1 to 200 minutes.

The dry-mixing may be, for example, performed at least once. First, a first dry mixture may be prepared by performing first dry-mixing on the composite positive electrode active material, the dry conductor, and the dry binder. The first dry-mixing may be, for example, performed at a temperature of 25 to 65 °C, at a rotation speed of 10 to 2000 rpm, for 15 minutes or less. Subsequently, a second mixture may be prepared by additionally performing second dry-mixing on the first dry mixture. The second dry-mixing may be, for example, performed at a temperature of 25 to 65 °C, at a rotation speed of 3,000 to 9000 rpm, for 10 to 60 minutes. By the second dry-mixing, a dry mixture including a fibrillized dry binder may be obtained.

The stirrer may be, for example, a kneader. The stirrer may include: for example, a chamber; at least one rotation axis arranged inside the chamber to rotate; and a blade rotatably coupled to the rotation axis and arranged in a longitudinal direction of the rotation axis. The blade may be, for example, at least one selected from a ribbon blade, a sigma blade, a jet (Z) blade, a dispersion blade, and a screw blade. When the blade is included, a dough-like mixture may be prepared by effectively mixing the electrode active material, the dry conductive material, and the dry binder.

Examples of the dry binder are vinylidene fluoride/hexafluoropropylene copolymer, polyvinylidene fluoride, polyacrylonitrile, polymethyl methacrylate, polytetrafluoroethylene (PTFE), mixtures of the aforementioned polymers, a styrene butadiene rubber-based polymer, and the like. The dry binder may be selected from dry binders used in the dry positive electrode film.

Examples of the dry conductive material are: carbon black, graphite particulates, natural graphite, artificial graphite, acetylene black, Ketjen black, carbon fibers; carbon nanotubes; metallic powders, metallic fibers, or metallic tubes of copper, nickel, aluminum, silver, and the like; and a conductive polymer such as a polyphenylene derivative, but are not limited thereto. Any suitable binder available in the art may be used. The conductive material may be, for example, a carbon-based conductive material. The dry conductive material may be selected from dry conductive materials used in the dry positive electrode film.

A plasticizer or a pore-forming agent may be further added to the dry mixture to form pores inside an electrode plate.

Contents of the composite positive electrode active material used in the dry positive electrode film, the dry binder, and the dry conductive material may be at levels suitable for use in lithium batteries in the art.

The dry positive electrode film may use, as the composite positive electrode active material, the composite positive electrode active material having the first core/shell structure and/or the second core/shell structure. A description of the composite positive electrode active material is referred to as the aforementioned composite positive electrode active material. The dry negative electrode film may use a dry negative electrode active material as a negative electrode active material.

Subsequently, the dry mixture may be molded to prepare a dry positive electrode film.

The prepared dry mixture may be introduced into an extrusion device and extruded in a sheet form or film form. A pressure at the extrusion may be, for example, 4 MPa to 100 MPa.

Next, an electrode current collector in which the interlayer is arranged on one side or both sides of the metal layer may be provided.

The providing of the electrode current collector in which the interlayer is arranged on one side or both sides of the metal layer may include, for example, providing the metal layer; and arranging the interlayer on one side or both sides of the metal layer.

A description of the metal layer of the positive electrode current collector is referred to as the aforementioned positive electrode current collector. The metal layer of the positive electrode current collector may be, for example, aluminum foil. The negative electrode current collector may be, for example, copper foil.

The arranging of the interlayer on one side or both sides of the metal layer may include dry coating and/or wet coating. The dry coating may be, for example, coating one side or both sides of the positive electrode current collector with a carbon-based conductive material and/or a precursor thereof. Deposition may be carried out at room temperature to high temperatures under atmospheric pressure to vacuum. When the interlayer arranged by the dry coating consists of the carbon-based conductive material, and the interlayer may not include a binder. By the wet coating, a composition including a carbon-based conductive material and a binder may be, for example, applied onto one side or both sides of the positive electrode current collector. The composition may include, for example, a carbon-based conductive material, a binder, and a processing solvent. Descriptions of the carbon-based conductive material and the binder are referred to the descriptions of the electrode. The processing solvent may be selected from solvents used in preparing a positive electrode slurry. The processing solvent may be removed by drying, after the composition is applied onto the electrode collector. Examples of coating methods are spin coating, dip coating, and the like, but are not limited thereto. Any coating method available in the art may be used.

Next, the dry positive electrode film may be arranged simultaneously or sequentially on one side or both sides of the electrode current collector to manufacture a dry positive electrode.

A rolling process may be added during and/or after arranging the dry positive electrode film on one side or both sides of the positive electrode current collector.

Examples of the rolling are a roll press, a flat press, and the like, but are not necessarily limited thereto. A pressure at the rolling may be, for example, 1.0 to 10.0 ton/cm. When the pressure at the rolling is excessively increased, the positive electrode current collector may crack. When the pressure at the rolling is excessively low, adhesion between the positive electrode current collector and the dry positive electrode film may be reduced.

### [Wet positive electrode: Manufacturing method]

Another embodiment provides a method of manufacturing a wet positive electrode.

The method of manufacturing a wet positive electrode includes: preparing a positive electrode active material slurry by mixing the composite positive electrode active material, a wet conductive material, a wet binder, and a solvent; directly coating the positive electrode current collector with the prepared positive electrode active material slurry; drying the positive electrode current collector coated with the positive electrode active material slurry to form a positive electrode active material layer and a wet positive electrode.

Alternatively, the positive electrode active material slurry may be cast onto a separate support, and a film obtained by exfoliation from the support may be then laminated on the positive electrode current collector to manufacture a wet positive electrode on which the positive electrode active material layer is formed.

Descriptions of the composite positive electrode active material, the dry conductive material, the dry binder, and the solvent included in the positive electrode active material slurry are referred to the description of the substrate.

### [Lithium battery: Manufacturing method]

The lithium battery is manufactured by the following example method, but embodiments of the present disclosure are not necessarily limited to this method and the method may vary according to required conditions.

First, according to the manufacturing method of the dry electrode, one of or both the positive electrode and the negative electrode may be manufactured. Alternatively, when one of the positive electrode and the negative electrode is manufactured by the manufacturing method of the dry electrode, the other electrode may be manufactured by the manufacturing method of the wet electrode. For example, the other electrode may be manufactured by preparing an electrode slurry including the electrode active material, a conductive material, a binder, and a solvent, coating an electrode current collector with the prepared electrode slurry, and coating the electrode current collector. The prepared dry positive electrode or wet positive electrode may include the aforementioned composite positive electrode active material.

Next, a separator to be inserted between the positive electrode and the negative electrode may be prepared.

The separator may be any suitable separator commonly used in a lithium battery. The separator may have, for example, low resistance to migration of ions in an electrolyte and have electrolyte solution-retaining ability. The separator may be, for example, glass fibers, polyester, Teflon, PE, PP, PTFE, and a combination thereof, each of which may be in a non-woven fabric form or a woven fabric form. For a lithium-ion battery, a rollable separator including, for example, PE or PP may be used. A separator with a good organic electrolyte solution-retaining ability may be used for a lithium-ion polymer battery.

The separator may be, for example, prepared according to the following example method, but embodiments are not limited thereto, and the method may be controlled according to the required conditions.

First, a separator composition may be prepared by mixing a polymer resin, a filler, and a solvent. Then, the separator composition may be directly coated and dried on the electrode to form a separator. In some embodiments, a separator film obtained by casting the separator composition on a support, drying, and separating it from the support may be laminated on an electrode to form a separator.

The polymer used in the separator preparation is not limited, and any suitable polymer available as a binder for an electrode plate may be used. For example, a vinylidene fluoride/hexafluoropropylene copolymer, polyvinylidene fluoride (PVDF), polyacrylonitrile, polymethyl methacrylate, or a mixture thereof may be used.

Next, the electrolyte may be prepared. A description of the electrolyte is referred to as the description of the lithium battery.

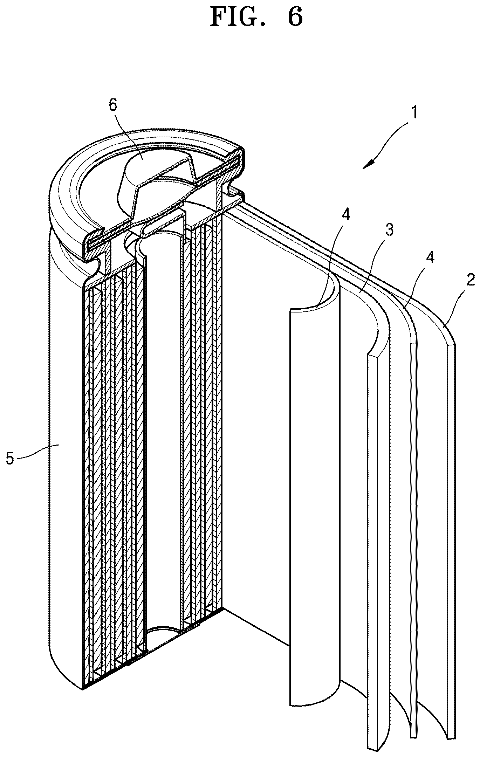

As shown in FIG. 6, a lithium battery 1 includes a positive electrode 3, a negative electrode 2, and a separator 4. The positive electrode 3, the negative electrode 2, and the separator 4 may be wound or folded to form a battery structure 7. The formed battery structure 7 may be accommodated in a battery case 5. Then, the battery case 5 may be filled with an organic electrolyte solution, and sealed with a cap assembly 6, thereby completing the manufacture of the lithium battery 1. The battery case 5 may be a cylindrical-type, but the shape of the battery case 5 is not limited thereto. For example, the battery case 5 may be a square-type, a thin-film type, or the like.

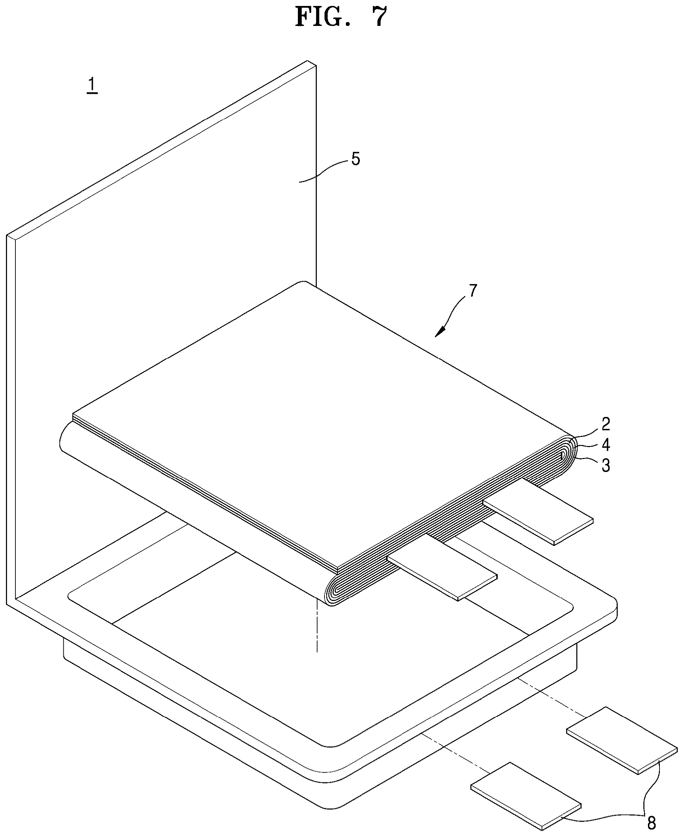

As shown in FIG. 7, the lithium battery 1 includes the positive electrode 3, the negative electrode 2, and the separator 4. The separator 4 may be arranged between the positive electrode 3 and the negative electrode 2, and the positive electrode 3, the negative electrode 2, and the separator 4 may be wound or folded to form a battery structure 7. The formed battery structure 7 may be accommodated in a battery case 5. The lithium secondary battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium battery 1. The battery case 5 may be a square-type, but the shape of the battery case 5 is not limited thereto. For example, the battery case 5 may be a cylindrical-type, a thin-film type, or the like.

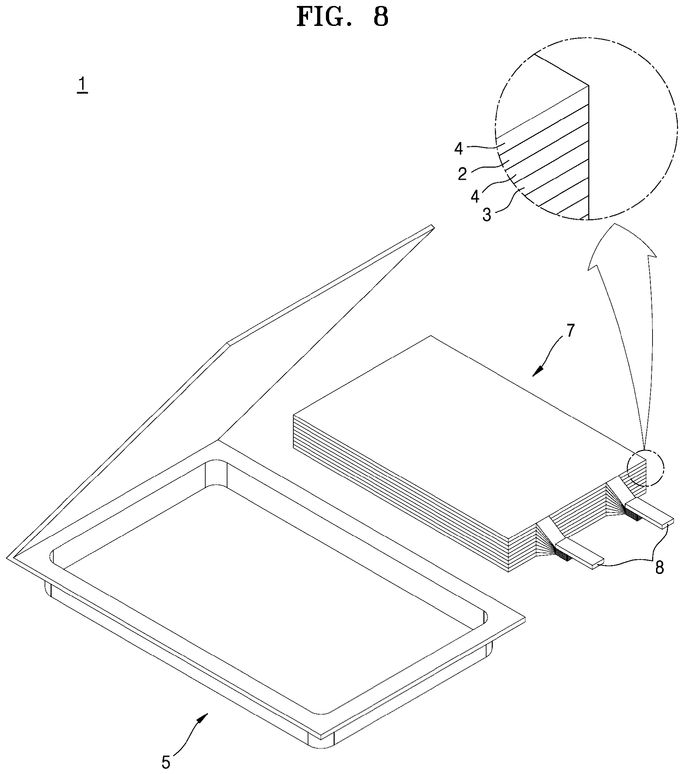

As shown in FIG. 8, the lithium battery 1 includes the positive electrode 3, the negative electrode 2, and the separator 4. The separator 4 may be disposed between the positive electrode 3 and the negative electrode 2 to form the battery structure 7. The battery structure 7 may be laminated in a bi-cell structure, and then accommodated in the battery case 5. The lithium secondary battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium battery 1. The battery case 5 may be a square-type, but the shape of the battery case 5 is not limited thereto. For example, the battery case 5 may be a cylindrical-type, a thin-film type, or the like.

A pouch-type lithium battery corresponds to use of a pouch as a battery case for lithium batteries of FIGS. 6 to 8. The pouch-type lithium battery may include at least one battery assembly. The separator may be arranged between the positive electrode and the negative electrode to form a battery structure. The battery assembly may be laminated as a bi-cell structure, impregnated with an organic electrolyte solution, and accommodated and sealed in a pouch to complete the manufacture of a pouch-type lithium battery. For example, although not shown in the drawings, the aforementioned positive electrode, negative electrode, and separator may be simply stacked and accommodated in a pouch in the form of an electrode assembly, or may be wound or folded into an electrode assembly in the form of a jelly roll to be then accommodated in a pouch. Then, an organic electrolyte solution may be injected into the pouch and sealed to complete the manufacture of a lithium battery.

Since the lithium battery has excellent lifespan characteristics and excellent high-rate characteristics, the lithium battery may be used in, for example, an electric vehicle (EV). For example, the lithium metal battery may be used in a hybrid vehicle, such as a plug-in hybrid electric vehicle (PHEV) or the like. The lithium metal battery may also be applicable to the fields requiring high-power storage. For example, the lithium metal battery may be used in an electric bicycle, a power tool, or the like.

A plurality of the lithium batteries may be stacked to form a battery module, and a plurality of the battery modules may form a battery pack. The battery pack may be used in a device that requires high capacity and large output. For example, the battery pack may be used in a laptop computer, a smart phone, an electronic vehicle, or the like. The battery module may include, for example, multiple batteries and a frame that holds the multiple batteries. The battery pack may include, for example, multiple battery modules and a bus bar that connects the battery modules together. The battery module and/or the battery pact may further include a cooling device. The multiple battery packs may be managed by a battery management system. The battery management system may include a battery pack and an electronic control device connected to the battery pack.

### [Composite positive electrode active material: Manufacturing method]

A method of manufacturing a composite positive electrode active material according to another embodiment includes: providing a first core and a second core; providing a composite; and mechanically milling the first core, the second core, and the composite to form a composite positive electrode active material, wherein the composite includes: at least one type of first metal oxide; and a first carbon-based material, the at least one type o first metal oxide is arranged in a matrix of the first carbon-based material matrix, and the first metal oxide is represented by a formula of MₐO_{b} (0<a≤3, 0<b<4, and b is not an integer when a is 1, 2, or 3), and M is at least one metal selected from Groups 2 to 16 of the periodic table of the elements.

For use as the first core, for example, the aforementioned first lithium transition metal oxide may be provided. The first lithium transition metal oxide may be, for example, a first lithium transition metal oxide having a layered structure and a Ni content of 60 mol% or more. The first lithium transition metal oxide may be, for example, a compound represented by one of Formulae 1 to 6.

For use as the second core, for example, the aforementioned second lithium transition metal oxide may be provided. The second lithium transition metal oxide may have, for example, an olivine-based crystal structure. The second lithium transition metal oxide may be, for example, a compound represented by one of Formulae 7 and 8.

The composite may be provided. The providing of the composite may include, for example, providing a reaction gas consisting of a carbon source gas to a structure including the metal oxide, followed by performing heat treatment to provide the composite. The providing of the composite may include, for example, supplying reaction gas formed of a carbon source gas to at least one of second metal oxide represented by MₐO_{c} (where 0<a≤3, 0<c<4, and c may be an integer when a is 1, 2, or 3,) and performing heat treatment to prepare a composite, wherein M may be at least one metal selected from Groups 2 to 13, 15, and 16 of the periodic table.

The carbon source gas may be gas consisting of a compound represented by Formula 10, or may be mixed gas including at least one selected from a compound represented by Formula 10, a compound represented by Formula 11, and oxygen-containing gas represented by Formula 12.

Formula 10 CnH₍₂ₙ₊₂₋ₐ₎[OH]ₐ

wherein, in Formula 10, n may be 1 to 20 and a may be 0 or 1;

Formula 11 CnH₂ₙ

wherein, in Formula 11, n may be 2 to 6;

Formula 12 CₓH_{y}O_{z}

wherein, in Formula 12, x may be 0 or an integer from 1 to 20, y may be 0 or an integer from 1 to 20, and z is 1 or 2.

The compound represented by Formula 10 and the compound represented by Formula 11 may be at least one selected from the group consisting of methane, ethylene, propylene, methanol, ethanol, and propanol. The oxygen-containing gas represented by Formula 12 may include, for example, carbon dioxide (CO₂), carbon monoxide (CO), water vapor (H₂O), or a mixture thereof.

Following the providing of the reaction gas consisting of the carbon source gas to the second metal oxide represented by MₐO_{c} (where 0<a≤3, 0<c≤4, and when a is 1, 2, or 3, c is an integer) and heat-treating the second metal oxide, a cooling process may be further performed by using at least one inert gas selected from the group consisting of nitrogen, helium, and argon. The cooling process refers to adjusting the reaction temperature to room temperature (20 °C to 25 °C). The carbon supply source gas may include at least one inert gas selected from the group consisting of nitrogen, helium, and argon.

In the preparation method of the composite, a process of growing a carbon-based material, e.g., graphene, may be performed under various conditions depending on a gas reaction.

According to a first condition, for example, methane may be provided first to a reactor, in which the second metal oxide represented by MₐO_{c} (where 0<a≤3 and 0<c≤4, and when a is 1, 2, or 3, c is an integer) is disposed, and the reaction temperature may be raised to a heat treatment temperature T. The time for raising the temperature to the heat treatment temperature T may be 10 minutes to about 4 hours, and the heat treatment temperature T may be in a range of about 700 °C to about 1,100 °C. The heat treatment may be performed during the reaction time at the heat treatment temperature T. The reaction time may be, for example, 4 hours to 8 hours. The heat-treated product may be cooled to room temperature to prepare a composite. The time required for the process of cooling from the heat treatment temperature T to room temperature may be, for example, about 1 hour to about 5 hours.

According to a second condition, for example, hydrogen may be provided first to a reactor, in which the second metal oxide represented by MₐO_{c} (where 0<a≤3 and 0<c≤4, and when a is 1, 2, or 3, c is an integer) is disposed, and the reaction temperature may be raised to the heat treatment temperature T. The time for raising the temperature to the heat treatment temperature T may be 10 minutes to about 4 hours, and the heat treatment temperature T may be in a range of about 700 °C to about 1,100 °C. After the heat treatment is performed at the heat treatment temperature T for a predetermined reaction time, methane gas may be supplied, and the heat-treatment may be performed for the residual reaction time. The reaction time may be, for example, 4 hours to 8 hours. The heat-treated product may be cooled to room temperature to prepare a composite. In the cooling process, nitrogen may be provided thereto. The time required for the process of cooling from the heat treatment temperature T to room temperature may be, for example, about 1 hour to about 5 hours.

According to a third condition, for example, hydrogen may be provided first to a reactor, in which the second metal oxide represented by MₐO_{c} (where 0<a≤3 and 0<c≤4, and when a is 1, 2, or 3, c is an integer) is disposed, and the reaction temperature may be raised to the heat treatment temperature T. The time for raising the temperature to the heat treatment temperature T may be 10 minutes to about 4 hours, and the heat treatment temperature T may be in a range of about 700 °C to about 1,100 °C. After the heat treatment is performed at the heat treatment temperature T for a predetermined reaction time, mixed gas of methane and hydrogen may be supplied, and the heat-treatment may be performed for the residual reaction time. The reaction time may be, for example, 4 hours to 8 hours. The heat-treated product may be cooled to room temperature to prepare a composite. In the cooling process, nitrogen may be provided thereto. The time required for the process of cooling from the heat treatment temperature T to room temperature may be, for example, about 1 hour to about 5 hours.

In the preparation of the composite, when the carbon supply source gas includes water vapor, the composite having excellent conductivity may be obtained. The content of water vapor in the mixed gas is not limited, and may be, for example, in a range of about 0.01 vol% to about 10 vol% based on 100 vol% of the total carbon source gas. The carbon supply source gas may be: for example, methane; mixed gas including methane and inert gas; or mixed gas including methane and oxygen-containing gas.

The carbon supply source gas may be: for example, methane; mixed gas including methane and carbon dioxide; or mixed gas including methane, carbon dioxide, and water vapor. The molar ratio of methane and carbon dioxide in the mixed gas of methane and carbon dioxide may be in a range of about 1:0.20 to about 1:0.50, about 1:0.25 to about 1:0.45, or about 1:0.30 to about 1:0.40. The molar ratio of methane and carbon dioxide and water vapor in the mixed gas of methane and carbon dioxide and water vapor may be in a range of about 1:0.20 to about 0.50:0.01 to 1.45, about 1:0.25 to about 0.45:0.10 to 1.35, or about 1:0.30 to about 0.40:0.50 to 1.0.

The carbon supply source gas may be, for example, carbon monoxide or carbon dioxide. The carbon supply source gas may be, for example, mixed gas of methane and nitrogen. The molar ratio of methane and nitrogen in the mixed gas of methane and nitrogen may be in a range of about 1: 0.20 to about 1: 0.50, about 1: 0.25 to about 1: 0.45, or about 1: 0.30 to about 1: 0.40. The carbon supply source gas may not include inert gas such as nitrogen.

The heat treatment pressure may be selected in consideration of the heat treatment temperature, the composition of the gas mixture, and the desired coating content of carbon. The heat treatment pressure may be controlled by adjusting the content of the inflowing gas mixture and the content of the outflowing gas mixture. The heat-treatment pressure may be, for example, greater than or equal to about 0.5 atm, greater than or equal to about 1 atm, greater than or equal to about 2 atm, greater than or equal to about 3 atm, greater than or equal to about 4 atm, or greater than or equal to about 5 atm. The heat-treatment pressure may be, for example, in a range of about 0.5 atm to about 10 atm, about 1 atm to about 10 atm, about 2 atm to about 10 atm, about 3 atm to about 10 atm, about 4 atm to about 10 atm, or about 5 atm to about 10 atm.

The time for the heat treatment time is not particularly limited, and may be selected in consideration of the heat treatment temperature, the heat treatment pressure, the composition of the gas mixture, and the desired coating content of carbon. For example, the reaction time at the heat treatment temperature may be, for example, in a range of 10 minutes to 100 hours, 30 minutes to 90 hours, or 50 minutes to 40 hours. For example, as time for the heat treatment increases, the content of graphene (e.g., carbon) deposited increases, and thus the electrical properties of the composite may be improved. However, such a trend may not necessarily be directly proportional to the time. For example, after a predetermined period of time, the deposition of carbon, e.g., graphene, may no longer occur, or the deposition rate of graphene may be lowered.

Through the gas-phase reaction of the carbon source gas, even at relatively low temperatures, a composite may be obtained by providing a uniform coating of the carbon-based material, for example, graphene, on one or more selected from the second metal oxide represented by MₐO_{c} (0 < a ≤ 3 and 0 < c ≤ 4 where if a is 1, 2, or 3 and c may be an integer) and a reduction product thereof, for example, the first metal oxide represented by MₐO_{b} (0 < a ≤ 3 and 0 < b < 4, and b may not be an integer when a is 1, 2, or 3).

The composite may include, for example, a matrix of a carbon-based material, for example, a graphene matrix, which has at least one structure selected from a spherical structure, a spiral structure having a plurality of spherical structures connected to one another, a cluster structure having a plurality of spherical structures agglomerated, and a sponge structure; and at least one selected from a first metal oxide represented by MₐO_{b} (0<a≤3, 0<b<4, wherein a is 1, 2, or 3, and b is not an integer) and a second metal oxide represented by MₐO_{c} (0<a≤3, 0<c≤4, if a is 1, 2, or 3, c may be an integer), disposed within the matrix of graphene.

Next, the first lithium transition metal oxide, the second lithium transition metal oxide, and the composite may be mechanically milled to prepare a composite positive electrode active material. For the milling, a Nobilta mixer or the like may be used. The number of revolutions of the mixer during the milling may be, for example, 1,000 rpm to 5000 rpm. The milling time may be, for example, 5 minutes to 100 minutes. The average particle diameter D50 of the composite used in the mechanical milling of the first lithium transition metal oxide and the second lithium transition metal oxide may be, for example, 50 nm to 200 nm, 100 nm to 300 nm, or 200 nm to 500nm. In the mechanically milling process, the milling method is not particularly limited, and any method capable of contacting the first lithium transition metal oxide, the second lithium transition metal oxide, and the composite in the art may be used.

The present disclosure is in greater details through Examples and Comparative Examples below. However, the following embodiments are for illustrative purpose only and shall not be construed as limiting the scope of the disclosure.

### (Preparation of composite)

### Preparation Example: Al₂O₃@Gr composite

Al₂O₃ particles (average particle diameter: about 15 nanometers (nm)) were placed in a reactor, and then the temperature inside the reactor was raised to 1,000 °C under the condition that CH₄ was supplied into the reactor at about 300 standard cubic centimeters per minute (sccm) at 1 atmosphere (atm) for about 30 minutes.

Subsequently, heat treatment was performed thereon while maintaining the same temperature for 7 hours. Then, the temperature inside the reactor was adjusted to room temperature (20 °C to 25 °C) to obtain a composite in which Al₂O₃ particles and a reduction product thereof, Al₂O_{z}. (where 0<z<3) particles, were embedded in graphene.

Here, the content of alumina included in the composite was 60 wt%.

### (Preparation of composite positive electrode active material)

Preparation Example 1: Preparation of 0.36 wt% of Al₂O₃@Gr composite-coated NCA91 (alumina 0.36 wt%) and 0.36 wt% of Al₂0₃@Gr composite-coated LFP (alumina 0.36 wt%) (weight ratio of 90:10)

LiNi_{0.91}Co_{0.05}Al_{0.04}O₂ (hereinafter referred to as NCA91) having an average particle diameter D50 of 14 µm, LiFePO₄ (hereinafter referred to as LFP) having an average particle diameter D50 of 3.5 µm, and the composite prepared in Preparation Example were milled using a Nobilta mixer (Hosokawa, Japan) at a rotation speed of about 1000 to 2000 revolutions per minutes (rpm) for about 5 to 30 minutes to obtain a composite positive electrode active material. A ratio of the total weight of NCA91 and LFP to the weight of the composite of Preparation Example 1 was 99.64:0.36. In addition, a weight ratio of NCA91 to LFP was 90:10.

Preparation Example 2: 0.36 wt% of Al₂O₃@Gr composite-coated NCA91 (alumina 0.36 wt%) and 0.36 wt% of Al₂O₃@Gr composite-coated LFP (alumina 0.36 wt%) (weight ratio of 80:20)

LiNi_{0.}.91Co_{0.05}Al_{0.04}O₂ (hereinafter referred to as NCA91) having an average particle diameter D50 of 14 µm, LiFePO₄ (hereinafter referred to as LFP) having an average particle diameter D50 of 3.5 µm, and the composite prepared in Preparation Example were milled using a Nobilta mixer (Hosokawa, Japan) at a rotation speed of about 1000 to 2000 rpm for about 5 to 30 minutes to obtain a composite positive electrode active material. A ratio of the total weight of NCA91 and LFP to the weight of the composite of Preparation Example 1 was 99.64:0.36. In addition, a weight ratio of NCA91 to LFP was 80:20.

Preparation Example 3: Al₂O₃@Gr composite 0.36 wt% (alumina 0.36 wt%)-coated NCA91 and Al₂O₃@Gr composite 0.36 wt% (alumina 0.36 wt%)-coated LFP (weight ratio of 75:25)

LiNi_{0.91}Co_{0.05}Al_{0.04}O₂ (hereinafter referred to as NCA91) having an average particle diameter D50 of 14 µm, LiFePO₄ (hereinafter referred to as LFP) having an average particle diameter D50 of 3.5 µm, and the composite prepared in Preparation Example were milled using a Nobilta mixer (Hosokawa, Japan) at a rotation speed of about 1000 to 2000 rpm for about 5 to 30 minutes to obtain a composite positive electrode active material. A ratio of the total weight of NCA91 and LFP to the weight of the composite of Preparation Example 1 was 99.64:0.36. In addition, a weight ratio of NCA91 to LFP was 75:25.

Preparation Example 4: 0.36 wt% of Al₂O₃@Gr composite-coated NCA91 (alumina 0.36 wt%) and 0.36 wt% of Al₂O₃@Gr composite-coated LFP (alumina 0.36 wt%) (weight ratio of 50:50)

LiNi_{0.91}Co_{0.05}Al_{0.04}O₂ (hereinafter referred to as NCA91) having an average particle diameter D50 of 14 µm, LiFePO₄ (hereinafter referred to as LFP) having an average particle diameter D50 of 3.5 µm, and the composite prepared in Preparation Example were milled using a Nobilta mixer (Hosokawa, Japan) at a rotation speed of about 1000 to 2000 rpm for about 5 to 30 minutes to obtain a composite positive electrode active material. A ratio of the total weight of NCA91 and LFP to the weight of the composite of Preparation Example 1 was 99.64:0.36. In addition, a weight ratio of NCA91 to LFP was 50:50.

Preparation Example 5: 0.36 wt% of Al₂O₃@Gr composite-coated NCA91 (alumina 0.36 wt%) and 0.36 wt% of Al₂O₃@Gr composite-coated LFP (alumina 0.36 wt%) (weight ratio of 20:80)

LiNi_{0.91}Co_{0.05}Al_{0.04}O₂ (hereinafter referred to as NCA91) having an average particle diameter D50 of 14 µm, LiFePO₄ (hereinafter referred to as LFP) having an average particle diameter D50 of 3.5 µm, and the composite prepared in Preparation Example were milled using a Nobilta mixer (Hosokawa, Japan) at a rotation speed of about 1000 to 2000 rpm for about 5 to 30 minutes to obtain a composite positive electrode active material. A ratio of the total weight of NCA91 and LFP to the weight of the composite of Preparation Example 1 was 99.64:0.36. In addition, a weight ratio of NCA91 to LFP was 20:80.

Preparation Example 6: 0.36 wt% of Al₂O₃@Gr composite-coated NCA91 (alumina 0.36 wt%) and LFP

LiNi_{0.91}Co_{0.05}Al_{0.04}O₂ (hereinafter referred to as NCA91) having an average particle diameter D50 of 14 µm and the composite prepared in Preparation Example above were milled using a Nobilta mixer (Hosokawa, Japan) at a rotation speed of about 1000 to 2000 rpm for about 5 to 30 minutes to obtain 0.36 wt% of Al₂O₃@Gr composite-coated NCA91 (alumina 0.36 wt%). Afterwards, LiFePO₄( (hereinafter LFP) having an average particle diameter D50 of 3.5 µm was added to 0.36 wt% of the Al₂O₃@Gr composite-coated NCA91 (alumina 0.36 wt%), and then milled using a Nobilta mixer (Hosokawa, Japan) at a rotation speed of about 1000 to 2000 rpm for about 5 to 30 minutes to obtain a composite positive electrode active material. A ratio of the weight of NCA91 to the weight of the composite of Preparation Example 1 was 99.64:0.36. In addition, a weight ratio of NCA91 to LFP was 90:10.

### Comparative Preparation Example 1: NCA91 and LFP

LiNi_{0.91}Co_{0.05}Al_{0.04}O₂ (hereinafter referred to as NCA91) having an average particle diameter D50 of 14 µm and LiFePO₄ (hereinafter referred to as LFP) having an average particle diameter D50 of 3.5 µm were milled using a Nobilta mixer (Hosokawa, Japan) at a rotation speed of about 1000 to 2000 rpm for about 5 to 30 minutes to obtain a composite positive electrode active material. A weight ratio of NCA91 to LFP was 90:10.

### Comparative Preparation Example 2: NCA91

LiNi_{0.91}Co_{0.05}Al_{0.04}O₂ (hereinafter referred to as NCA91) having an average particle diameter D50 of 14 µm was prepared without a milling process.

### Comparative Preparation Example 3: Preparation of carbon-coated NCA91 and carbon-coated LFP

0.36 wt% of carbon black was added to a Thinky mixer and applied to each of NCA91 having an average particle diameter D50 of 14 µm, LPF of an average particle diameter D50 of 3.5 µm at a rotation speed of 1000 to 2000 rpm for about 2 minutes to 5 minutes to prepare carbon-coated NCA91 and carbon-coated LFP. A weight ratio of the total weight of the NCA91 and the LFP to the weight of the composite of Preparation Example 1 was 99.64:0.36. In addition, a weight ratio of NCA91 to LFP was 90:10.

### Comparative Preparation Example 4: Preparation of Gr-coated NCA91 and Gr-coated LFP (weight ratio of 90:10)

LiNi_{0.91}Co_{0.05}Al_{0.04}O₂ (hereinafter referred to as NCA91) having an average particle diameter D50 of 14 µm, LiFePO₄ (hereinafter referred to as LFP) having an average particle diameter D50 of 3.5 µm, and graphene were milled using a Nobilta mixer (Hosokawa, Japan) at a rotation speed of about 1000 to 2000 rpm for about 5 to 30 minutes to obtain a composite positive electrode active material. A weight ratio of the total weight of the NCA91 and the LFP to the weight of the composite of Preparation Example 1 was 99.64:0.36. In addition, a weight ratio of NCA91 to LFP was 90:10.

### (Manufacture of lithium battery (half-cell))

### Example 1

### (Preparation of dry positive electrode film and dry positive electrode)

The dry composite positive electrode active material prepared in Preparation Example 1, a dry carbon conductive material, and polytetrafluoroethylene (PTFE) as a dry binder were added at a weight ratio of 96:2:2 to a blade mixer and subjected to primary dry mixing for 10 minutes at 25 °C at 1200 rpm to prepare a first dry mixture in which the dry positive electrode active material, the dry conductive material, and the dry binder were uniformly mixed. For the dry carbon conductive material, a mixture in which carbon nanotube (CNT) and ketjen black (ECP) were mixed at a ratio of 7:3 was used.

Subsequently, to allow fiberization of the binder to proceed, a second drying process was additionally performed on the first dry mixture at 25 °C and a speed of 4,000 rpm for 25 minutes to prepare a second dry mixture.

In the preparation of the first dry mixture and the second dry mixture, a separate solvent was not used.

The prepared second dry mixture was added to an extruder to extrude a sheettype self-standing dry positive electrode film. Here, the pressure at the extrusion was 60 MPa.

The prepared self-standing dry positive electrode film was rolled to prepare a rolled self-standing dry positive electrode film. Here, the pressure at the rolling was 3.5 ton/cm². A thickness of the dry positive electrode film was about 200 µm.

Then, a positive electrode current collector in which a carbon layer was applied onto one side of a 25 µm-thick aluminum thin film was prepared.

To prepare the carbon layer, a carbon conductive material (e.g., Danka black) and poly(vinylidene fluoride) (PVDF) were applied to the aluminum thin film and then dried. Here, a thickness of the carbon layer arranged on one side of the positive electrode current collector was about 1 µm.

Then, the rolled dry positive electrode film was arranged on one side of the positive electrode current collector to prepare a dry positive electrode.

### (Preparation of coin cell)

A coin cell was manufactured by using the prepared positive electrode, lithium metal as a counter electrode, a PTFE separator, and a solution in which 1.3 M LiPF₆ was dissolved in ethylene carbonate (EC)+ethyl methyl carbonate (EMC)+dimethyl carbonate (DMC) (at a volume ratio of 3:4:3) as an electrolyte.

### Example 2

A dry electrode film, a dry positive electrode, and a coin cell were manufactured in the same manner as in Example 1, except that the composite positive electrode active material of Manufacture Example 2 was used instead of the composite positive electrode active material of Manufacture Example 1.

### Example 3

A dry electrode film, a dry positive electrode, and a coin cell were manufactured in the same manner as in Example 1, except that the composite positive electrode active material of Manufacture Example 3 was used instead of the composite positive electrode active material of Manufacture Example 1.

### Example 4

A dry electrode film, a dry positive electrode, and a coin cell were manufactured in the same manner as in Example 1, except that the composite positive electrode active material of Manufacture Example 4 was used instead of the composite positive electrode active material of Manufacture Example 1.

### Example 5

A dry electrode film, a dry positive electrode, and a coin cell were manufactured in the same manner as in Example 1, except that the composite positive electrode active material of Manufacture Example 5 was used instead of the composite positive electrode active material of Manufacture Example 1.

### Example 6

A dry electrode film, a dry positive electrode, and a coin cell were manufactured in the same manner as in Example 1, except that the composite positive electrode active material of Manufacture Example 6 was used instead of the composite positive electrode active material of Manufacture Example 1.

### Comparative Example 1

A dry electrode film, a dry positive electrode, and a coin cell were manufactured in the same manner as in Example 1, except that the composite positive electrode active material of Comparative Manufacture Example 1 was used instead of the composite positive electrode active material of Manufacture Example 1.

### Comparative Example 2

A dry electrode film, a dry positive electrode, and a coin cell were manufactured in the same manner as in Example 1, except that the composite positive electrode active material of Comparative Manufacture Example 2 was used instead of the composite positive electrode active material of Manufacture Example 1.

### Comparative Example 3

A dry electrode film, a dry positive electrode, and a coin cell were manufactured in the same manner as in Example 1, except that the composite positive electrode active material of Comparative Manufacture Example 3 was used instead of the composite positive electrode active material of Manufacture Example 1.

### Comparative Example 4

A dry electrode film, a dry positive electrode, and a coin cell were manufactured in the same manner as in Example 1, except that the composite positive electrode active material of Comparative Manufacture Example 4 was used instead of the composite positive electrode active material of Manufacture Example 1.

### Evaluation Example 1: SEM, HR-TEM, and SEM-EDS analysis

For the composite positive electrode active material prepared in Preparation Example 1, scanning electron microscopy, high-resolution transmission electron microscopy, and energy-dispersive X-ray spectroscopy (EDS) were performed.

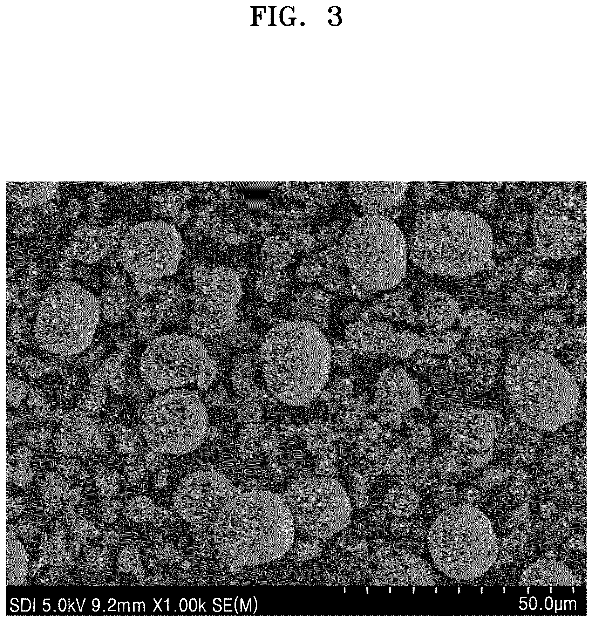

For SEM-EDX analysis, FEI Titan 80-300 available from Philips Company was used. FIG. 3 is an SEM image of the composite positive electrode active material prepared in Preparation Example 1.

Referring to FIG. 3, it was confirmed that the composite including graphene was arranged on the large-diameter NCA91 core and small-diameter LFP core in the composite positive electrode active material prepared in Example 1.

### Evaluation Example 2: Evaluation of specific capacity and mixture density

For the composite positive electrode active materials prepared in Preparation Examples 1 to 5, specific capacity and mixture density were measured.

The specific capacity of the composite positive electrode active material was measured by discharging each of coin cells including the composite positive electrode active materials prepared in Preparation Examples 1 to 5 at a range of 3.0 to 4.3 V for 5 hours to obtain an electric charge (current x hour, milliampere-hour (mAh)), and by dividing the electric charge by the weight of the positive electrode active material. The mixture density was calculated by measuring the weight and volume (area x thickness) of the positive electrode.

For the composite positive electrode active materials prepared in Preparation Examples 1 to 5, the specific capacity and mixture density are shown in Table 1.

**Table 1**

| | Content of NCA coated with Al₂O₃@Gr composite | Content of LFP coated with Al₂O₃@Gr composite | Secific capacity (mAh/g) | Mixture density (g/cc) |
|---|---|---|---|---|
| Preparation Example 1 | 90 | 10 | 201.1 | 3.61 |
| Preparation Example 2 | 80 | 20 | 197.2 | 3.60 |
| Preparation Example 3 | 75 | 25 | 196.2 | 3.59 |
| Preparation Example 4 | 50 | 50 | 185.5 | 3.57 |
| Preparation Example 5 | 20 | 80 | 173.8 | 3.54 |

As shown in Table 1, it was confirmed that the specific capacity and mixture density increased with the increase in the content of Al₂O₃@Gr composite-coated NCA in the composite positive electrode active material.

### Evaluation Example 3: Evaluation of charge and discharge characteristics at high temperature (40 °C)

Each of the lithium batteries prepared in Examples 1 to 6 and Comparative Examples 1 to 4 was charged with a constant current of 0.1 C rate at 25 °C until a voltage reached 4.3 voltage (V) (vs. Li), and was then cut-off at a current of 0.05 C rate while maintaining the voltage at 4.3 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.5 C rate at 25 °C until a voltage reached 4.3 V (vs. Li), and was then cut-off at a current of 0.05 C rate while maintaining the voltage at 4.3 V in a constant voltage mode. Subsequently, each of the lithium batteries was discharged at a constant current of 0.5 C rate until the voltage reached 2.8 V (vs. Li) (1^{st} cycle). This cycle was repeated until the 50^{th} cycle under the same conditions.

In all charging and discharging cycles, a 10-minute stop time was provided after every one charging and discharging cycle. In the high-temperature charging and discharging experiment, the results of measuring the charge capacity in the 1^{st} cycle, the discharge capacity in the 1^{st} cycle, the efficiency in the 1^{st} cycle, the electrode density, and the capacity retention ratio [%] in the 50^{th} cycle [%] are shown in Table 2.

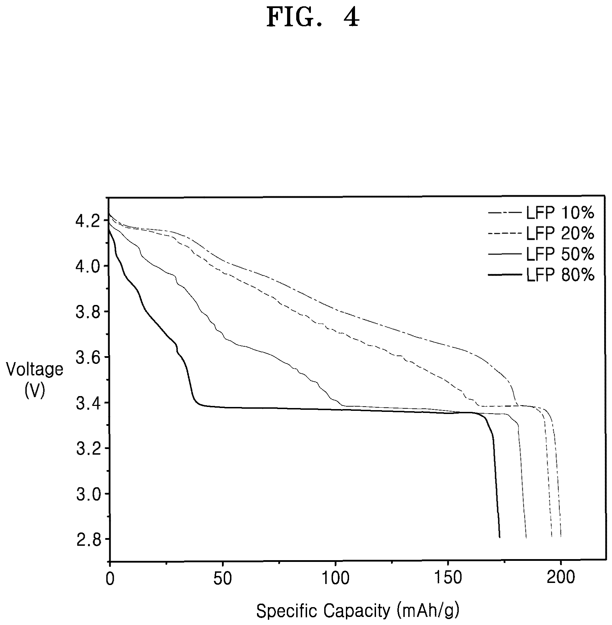

In addition, in the high-temperature charging and discharging experiment, the results of measuring the capacity retention ratio [%] at each cycle from the 1^{st} cycle to the 50^{th} cycle are shown in FIG. 4. The capacity retention ratio is defined by Equation 1.

### Equation 1

Capacity retention ratio [%] at each cycle=(discharge capacity in each cycle/discharge capacity in 1^{st} cycle)×100

### Evaluation Example 4: Measurement of gas generation

An content of gas generated when the lithium batteries manufactured in Examples 1 to 6 and Comparative Examples 1 to 4 were left at 130 °C for 1 hour.

Specifically, a charged positive electrode was placed in a pouch, sealed, and weighed. After 1 hour at 130 °C, the weight change obtained by measuring the density of the pouch, including the gas generated from the positive electrode, was converted to volume, and the of gas generated was calculated according to Archimedes' principle.

Results of the measurement are shown in Table 2.

**Table 2**

| | Positive electrode active material | Initial charge capacit y (mAh/g ) | Initial dischar ge capacit y (mAh/g ) | Initial efficie ncy (%) | Electr ode densit y (g/cc) | Retenti on ratio (%@50^{t h} ) | Conte nt of gas produ ced (cc/g) |
|---|---|---|---|---|---|---|---|
| Exa mple 1 | Composite-coated NCA91+ Composite-coated LFP (90:10) | 226.7 | 200.4 | 88.4 | 3.61 | 94 | 9.96 |
| Exa mple 2 | Composite-coated NCA91+ Composite-coated LFP (80:20) | 219.9 | 196.1 | 89.1 | 3.6 | 94.2 | 9.82 |
| Exa mple 3 | Composite-coated NCA91+ Composite-coated LFP (75:25) | 216.1 | 193.8 | 89.7 | 3.59 | 95.1 | 9.78 |
| Exa mple 4 | Composite-coated NCA91+ Composite-coated LFP (50:50) | 197.4 | 182.5 | 92.5 | 3.57 | 96.5 | 9.62 |
| Exa mple 5 | Composite-coated NCA91+ Composite-coated LFP (20:80) | 176.4 | 169.0 | 94.8 | 3.54 | 97.2 | 9.38 |
| Exa mple 6 | Composite-coated NCA91+ LFP (90:10) | 227.5 | 198.6 | 87.3 | 3.66 | 93.5 | 10.12 |
| Com parat ive Exa mple 1 | NCA91+ LFP (90:10) | 231.2 | 201.1 | 87 | 3.64 | 91.2 | 10.09 |
| Com parat ive Exa mple 2 | NCA91 | 234.4 | 203.6 | 86.9 | 3.67 | 89.7 | 10.10 |
| Com parat ive Exa mple 3 | Carbon-coated NCA91+ Carbon-coated LFP (90:10) | 227.6 | 199.8 | 87.8 | 3.6 | 90.8 | 11.20 |
| Com parat ive Exa mple 4 | Graphene-coated NCA91+ Graphene-coated LFP (90:10) | 227.6 | 200.1 | 87.9 | 3.62 | 92.5 | 10.23 |

As shown in Table 2, the lithium batteries of Examples 1 to 6 had improved lifetime characteristics at high temperatures compared to the lithium batteries of Comparative Examples 1 to 4.

The lithium batteries of Examples 1 to 3 produced relatively less gas than the lithium battery of Example 6.

The lithium batteries of Examples 1 to 3 had relatively superior initial capacity and electrode density compared to the lithium batteries of Examples 4 and 5.

**<Description of reference numerals>**

| | | | |
|---|---|---|---|
| 1 | Lithium battery | 2 | Negative electrode |
| 3 | Positive electrode | 4 | Separator |
| 5 | Battery case | 6 | Cap assembly |
| 7 | Battery assembly | 8 | Electrode tab |
| 10 | First core | 20 | Second core |
| 30 | Shell | 31 | First metal oxide |
| 32 | First carbon-based material | 33 | Second carbon-based material |
| 100 | Composite positive electrode active material | | |

## Claims

1. A composite positive electrode active material comprising:
a first core (1^{st} core) comprising a first lithium transition metal oxide;
a second core (2^{nd} core) comprising a second lithium transition metal oxide; and
a shell arranged over a surface of at least one of the first core and the second core,
the shell including: at least one type of first metal oxide; and a first carbon-based material,
wherein the at least one type of first metal oxide is arranged in a matrix of the first carbon-based material,
the at least one type of first metal oxide is represented by a formula of MₐO_{b} (0<a≤3, 0<b<4, and b is not an integer when a is 1, 2, or 3), wherein M is at least one metal selected from Groups 2 to 13, 15, and 16 of the periodic table of the elements,
the first core and the second core have different particle diameters,
the first lithium transition metal oxide has a layered crystal structure and a nitrogen (Ni) content of 60 mol% or more, and
the second lithium transition metal oxide has an olivine-based crystal structure.

2. The composite positive electrode active material of claim 1, wherein a particle diameter of the first lithium transition metal oxide included in the first core is greater than a particle diameter of the second lithium transition metal oxide included in the second core.

3. The composite positive electrode active material of claim 1, wherein
a particle size distribution of the first lithium transition metal oxide and the second lithium transition metal oxide is a bimodal particle size distribution, and
a particle diameter ratio of the first lithium transition metal oxide to the second lithium transition metal oxide is 3:1 to 40:1.

4. The composite positive electrode active material of claim 1, wherein
a particle diameter the first lithium transition metal oxide is greater than 10 micrometer (µm) but is 30 µm or less, and
a particle diameter of the second lithium transition metal oxide is 1 µm to 10 µm.

5. The composite positive electrode active material of claim 1, wherein a weight ratio of the first lithium transition metal oxide to the second lithium transition metal oxide is 90:10 to 60:40.

6. The composite positive electrode active material of claim 1, wherein the first lithium transition metal oxide is represented by a formula selected from Formulae 1 to 6:
Formula 1 LiₐNiₓCo_{y}M_{z}O_{2-b}A_{b}
wherein, in Formula 1,
1.0≤a≤1.2, 0≤b≤0.2, 0.8≤x<1, 0≤y≤0.3, 0<z≤0.3, and x+y+z=1,
M is manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof.
Formula 2 LiNiₓCo_{y}Mn_{z}O₂
Formula 3 LiNiₓCo_{y}Al_{z}O₂
wherein, in Formulae 2 and 3, 0.8≤x≤0.95, 0≤y≤0.2, 0<z≤0.2, and x+y+z=1,
Formula 4 LiNiₓCo_{y}Mn_{z}Al_{w}O₂
wherein, in Formula 4, 0.8≤x≤0.95, 0≤y≤0.2, 0<z≤0.2, 0<w≤0.2, and
x+y+z+w=1,
Formula 5 LiₐCoₓM_{y}O_{2-b}A_{b}
wherein, in Formula 5,
1.0≤a≤1.2, 0≤b≤0.2, 0.9≤x≤1, 0≤y≤0.1, and x+y=1,
M is manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), or a combination thereof, and
A is F, S, Cl, Br, or a combination thereof,
Formula 6 LiₐNiₓMn_{y}M'_{z}O_{2-b}A_{b}
wherein, in Formula 6,
1.0≤a≤1.2, 0≤b≤0.2, 0 <x≤0.3, 0.5≤y<1, 0<z≤0.3, and x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof.

7. The composite positive electrode active material of claim 1, wherein the second lithium transition metal oxide is represented by a formula selected from Formulae 7 and 8:
Formula 7 LiₐM1ₓM2_{y}PO_{4-b}X_{b}
wherein, in Formula 7, 0.90≤a≤1.1, 0≤x≤0.9, 0≤y≤0.5, 0.9 <x+y<1.1, and 0≤b≤2 ,
M1 is chromium (Cr), manganese (Mn), iron (Fe), cobalt (Co), nickel (Ni), copper (Cu), zirconium (Zr), or a combination thereof, and
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chrome (Cr), vanadium (V), scandium (Sc), yttrium (Y), or a combination thereof, and X is O, F, S, P or a combination thereof,
Formula 8 LiₐM3_{z}PO₄
wherein, in Formula 8, 0.90≤a≤1.1, 0.9≤z≤1.1, and
M3 is chrome (Cr), manganese (Mn), iron (Fe), cobalt (Co), nickel (Ni), copper (Cu), zirconium (Zr), or a combination thereof.

8. The composite positive electrode active material of claim 1, wherein the shell is arranged over the surfaces of the first core and the second core.

9. The composite positive electrode active material of claim 1, wherein
a metal included in the at least one type of first metal oxide is at least one metal selected from Al, Nb, Mg, Sc, Ti, Zr, V, W, Mn, Fe, Co, Pd, Cu, Ag, Zn, Sb, and Se, and
the at least one type of first metal oxide is at least one selected from Al₂O_{z} (0<z<3), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (<y<2), MnO_{y} (<y<2), Fe₂O_{z} (0<z<3), Co₃O_{w} (0<w<4), PdOₓ (<x<1), CuOₓ (0<x<1), AgOₓ (0<x<1), ZnOₓ (0<x<1), Sb₂O_{z} (0<z<3), and SeO_{y} (where 0<y<2).

10. The composite positive electrode active material of claim 1, wherein
the shell further includes a second metal oxide,
the second metal oxide is represented by a formula of MₐO_{c} (0<a≤3, 0<c≤4, and c is not an integer when a is 1, 2, or 3),
the second metal oxide includes the same metal as a metal included in the at least one type of first metal oxide,
c/a, which is a ratio of c to a of the second metal oxide, has a greater value than b/a, which is a ratio of b to a of the at least one first metal oxide, and the second metal oxide is arranged within a matrix of the first carbon-based material.

11. The composite positive electrode active material of claim 10, wherein
the second metal oxide is selected from Al_{z}O₃, NbO, NbO₂, Nb₂O₅MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂, and
the at least one type of first metal oxide is a reduction product of the second metal oxide.

12. The composite positive electrode active material of claim 1, wherein a thickness of the shell is 0.1 nanometers (nm) to 5 µm, and the shell has a single-layer structure or a multi-layer structure.

13. The composite positive electrode active material of claim 1, wherein a weight of the shell is 0.01 to 5 wt% based on a total weight of the composite positive electrode active material.

14. The composite positive electrode active material of claim 1, further comprising
a third metal doped on the first core or the second core, or a third metal oxide applying on the first core or the second core,
the shell is arranged on the third metal oxide, and
the third metal oxide is an oxide of at least one third metal selected from aluminum (Al), zirconium (Zr), tungsten (W), and cobalt (Co).

15. The composite positive electrode active material of claim 1, wherein
the shell further includes a second carbon-based material,
the second carbon-based material has a fibrous carbon-based material having an aspect ratio of 10 or more.
the second carbon-based material includes carbon nanofibers, a carbon nanotubes, or a combination thereof,
the carbon nanotubes includes a primary carbon nanotube structure, a secondary carbon nanotube structure formed by aggregation of a plurality of particles of the primary carbon nanotube structure, and
the primary carbon nanotube structure is a single carbon nanotube unit.

16. The composite positive electrode active material of claim 1, wherein
the first carbon-based material is chemically bound to a transition metal of the first lithium transition metal oxide or a transition metal of the second lithium transition metal oxide, through a chemical bond,
a carbon atom (C) of the first carbon-based material is bound to a transition metal (Me) of the first lithium transition metal oxide or a transition metal (Me) of the second lithium transition metal oxide, through an oxygen-mediated C-O-Me bond, or
the at least one type of first metal oxide is bound to the first carbon-based material, through a chemical bond.

17. A positive electrode comprising:
a positive electrode current collector; and
a positive electrode active material layer arranged on one side or both sides of the positive electrode current collector and including the composite positive electrode active material according to any one of claims 1 to 16.

18. The positive electrode of claim 17, wherein
the positive electrode current collector includes a base film and a metal layer arranged on one side or both sides of the base film,
the base film includes a polymer, the polymer including polyethylene terephthalate (PET), polyethylene (PE), polypropylene (PP), polybutylene terephthalate (PBT), polyimide (PI), or a combination thereof, and
the metal layer includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

19. The positive electrode of claim 17, wherein the positive electrode is a dry positive electrode or a wet positive electrode.

20. A lithium battery comprising:
the positive electrode of claim 17;
a negative electrode; and
an electrolyte arranged between the positive electrode and the negative electrode.
